# EUROPÄISCHE PATENTANMELDUNG

(11) **EP 4 831 683 A1**
(43) Veröffentlichungstag der Anmeldung: **28.10.2026**
(21) Anmeldenummer: 26158925.3
(22) Anmeldetag: 17.02.2026
(51) Int. Cl.: G01S 7/497, G01S 17/36, G01S 7/4863

(54) **OPTOELEKTRONISCHER EMPFÄNGER, OPTOELEKTRONISCHER SENSOR, VERWENDUNG UND VERFAHREN FÜR ABSTANDSMESSUNG MITTELS LICHTLAUFZEITVERFAHREN**

(30) Priorität: 24.04.2025 DE 102025115864
(71) Anmelder: SICK AG, 79183 Waldkirch (DE)
(72) Erfinder: Herbstritt, Alexander, 79104 Freiburg (DE); Geisemeyer, Ino, 79117 Freiburg (DE)
(74) Vertreter: Manitz Finsterwald Patent- und Rechtsanwaltspartnerschaft mbB

(57) **Zusammenfassung**

Die Erfindung betrifft einen optoelektronischen Empfänger, insbesondere für Abstandsmessung mittels Laufzeitverfahren, umfassend zumindest einen Signalgenerator zur Erzeugung zumindest eines Diagnosesignals, ein Pixelarray mit zumindest einem, insbesondere differentiellen, Empfangspixel und mit zumindest einem Referenzpixel, wobei das Pixelarray dazu ausgebildet ist, basierend auf mittels des Empfangspixels empfangenem Empfangslicht ein Empfangssignal und/oder durch Auslesen des Referenzpixels ein Referenzsignal zu erzeugen und auszugeben. Der optoelektronische Empfänger umfasst ferner zumindest eine Verarbeitungseinheit zur Signalverarbeitung und zumindest eine Verbindungseinheit, welche mit dem Pixelarray, dem Signalgenerator und der Verarbeitungseinheit verbunden ist und dazu ausgebildet ist, wahlweise das Pixelarray oder den Signalgenerator mit der Verarbeitungseinheit zu koppeln, sodass wahlweise einerseits das Empfangssignal und/oder das Referenzsignal oder andererseits das Diagnosesignal in die Verarbeitungseinheit zur Signalverarbeitung eingespeist werden kann, wobei die Verbindungseinheit dazu ausgebildet ist, den Signalgenerator mit der Verarbeitungseinheit in bestimmten Zeitabständen, und vorzugsweise während, insbesondere am Ende, jeder Beleuchtungsphase der Abstandsmessung und/oder zwischen jeder Beleuchtungsphase der Abstandsmessung, zu koppeln, um für einen ersten Funktionstest, insbesondere für die Aufnahme von Diagnosedaten, das Diagnosesignal in die Verarbeitungseinheit zur Signalverarbeitung einzuspeisen.

## Beschreibung

Die Erfindung betrifft einen optoelektronischen Empfänger, einen optoelektronischen Sensor, eine Verwendung und ein Verfahren, insbesondere für Abstandsmessung mittels (Licht-)Laufzeitverfahren.

Bei herkömmlichen optoelektronischen Empfängern und optoelektronischen Sensoren werden Komponenten oft redundant vorgesehen, um einen möglichst sicheren Betrieb des optoelektronischen Empfängers bzw. des Sensors zu ermöglichen. Dabei können die hierin verwendeten Begriffe sicher oder Sicherheit im Sinne von bestimmten sicherheitsspezifischen Normen verstanden werden, wie zum Beispiel IEC 61508, ISO 13849 oder IEC 62998. Eine Redundanz (d.h. die Verwendung von zwei optoelektronischen Empfängern oder redundanten Strukturen innerhalb des Empfängers) kann jedoch Nachteile mit sich bringen, wie zum Beispiel eine größere Chipgröße, eine größere Gerätegröße, einen höheren Stromverbrauch, eine längere Verarbeitungszeit und/oder höhere Kosten.

Die Überwachung bzw. das Testen von Komponenten eines optoelektronischen Empfängers, idealerweise während seines Betriebs, kann die Leistungsfähigkeit des optoelektronischen Empfängers, insbesondere im Hinblick auf seine funktionelle Sicherheit, erhöhen. Insbesondere kann es für sicherheitsgerichtete Anwendungen förderlich oder erforderlich sein, durch die Implementierung von Funktionstests einen bestimmten Grad an Diagnosedeckung zu erreichen. In anderen Worten sollen bestimmte interne Fehler durch geeignete Funktionstests möglichst sicher erkannt werden können. Dies kann von besonderer Bedeutung sein, wenn Komponenten des optoelektronischen Empfängers nicht redundant vorhanden sind.

Der Erfindung liegt die Aufgabe zugrunde, die Effizienz und Leistungsfähigkeit eines optoelektronischen Empfängers, insbesondere im Hinblick auf seine funktionale Sicherheit, zu verbessern.

Zur Lösung der Aufgabe ist ein optoelektronischer Empfänger mit den Merkmalen des Anspruchs 1 vorgesehen.

Der erfindungsgemäße optoelektronische Empfänger, insbesondere für Abstandsmessung mittels (Licht-)Laufzeitverfahren, umfasst zumindest einen Signalgenerator zur Erzeugung zumindest eines Diagnosesignals und ein Pixelarray mit zumindest einem Empfangspixel und mit zumindest einem Referenzpixel, wobei das Pixelarray dazu ausgebildet ist, basierend auf mittels des Empfangspixels empfangenem Empfangslicht ein Empfangssignal und/oder durch Auslesen des Referenzpixels ein Referenzsignal zu erzeugen und auszugeben. Der optoelektronische Empfänger umfasst ferner zumindest eine Verarbeitungseinheit zur Signalverarbeitung und zumindest eine Verbindungseinheit, welche mit dem Pixelarray, dem Signalgenerator und der Verarbeitungseinheit verbunden ist und dazu ausgebildet ist, wahlweise das Pixelarray oder den Signalgenerator mit der Verarbeitungseinheit zu koppeln, sodass wahlweise einerseits das Empfangssignal und/oder das Referenzsignal oder andererseits das Diagnosesignal in die Verarbeitungseinheit zur Signalverarbeitung eingespeist werden kann. Die Verbindungseinheit ist dazu ausgebildet, den Signalgenerator mit der Verarbeitungseinheit in (vor-)bestimmten Zeitabständen zu koppeln, um für einen ersten Funktionstest, insbesondere für die Aufnahme von Diagnosedaten, das Diagnosesignal in die Verarbeitungseinheit zur Signalverarbeitung einzuspeisen.

Vorzugsweise ist die Verbindungseinheit ausgebildet, für den ersten Funktionstest den zumindest einen Signalgenerator mit der Verarbeitungseinheit (zu vorbestimmten Zeitpunkten) während, insbesondere am Ende, jeder Beleuchtungsphase der Abstandsmessung und/oder zwischen jeder Beleuchtungsphase der Abstandsmessung zu koppeln. Vorzugsweise ist die Verbindungseinheit ausgebildet, für den ersten Funktionstest den zumindest einen Signalgenerator mit der Verarbeitungseinheit mit der gleichen Aufnahmerate wie die Abstandsmessung zu koppeln.

Der Erfindung liegt mit anderen Worten der Gedanke zugrunde, in dem optoelektronischen Empfänger eine Verbindungseinheit vorzusehen oder eine vorhandene Verbindungseinheit zu nutzen, mittels welcher wahlweise eine Kopplung zwischen der Verarbeitungseinheit und dem Pixelarray oder zwischen der Verarbeitungseinheit und dem zumindest einen Signalgenerator hergestellt werden kann. Mit anderen Worten kann mittels der Verbindungseinheit das Empfangssignal und/oder das Referenzsignal mit dem Diagnosesignal für die folgende Signalverarbeitung, insbesondere auf ein Steuersignal einer Steuerung hin, für einen von äußeren Einflüssen unabhängigen (ersten) Funktionstest ersetzt werden. Zudem ist die Möglichkeit eröffnet, mittels des zumindest einen Referenzpixels weitere (oder alternative) Funktionstest zu implementieren. Diese Vorgehensweise/n kann/können erlauben, Fehler in dem optoelektronischen Empfänger, und insbesondere in der Verarbeitungseinheit und auch in weiteren Komponenten, z.B. in einer (optionalen) nachgeschaltete Datenvorverarbeitungseinheit, während des Betriebs des optoelektronischen Empfängers zu erkennen und die funktionale Sicherheit des optoelektronischen Empfängers zu verbessern, ohne dass redundante Hardware-Strukturen vorgesehen werden müssen. Auf die Erkennung eines Fehlers hin kann beispielsweise ein Warnsignal ausgegeben werden. Diese Implementierung des optoelektronischen Empfängers kann effizienter sein hinsichtlich (zusätzlicher) Schaltungen, des Stromverbrauchs, der Software-Anforderungen, der Verarbeitungszeit und weiteres. Insgesamt kann so die Effizienz und/oder Leistungsfähigkeit des optoelektronischen Empfängers, insbesondere im Hinblick auf seine funktionelle Sicherheit, erhöht werden. Vorzugsweise kann der Einsatz (herkömmlicher) optoelektronischer Empfänger für Sicherheitsanwendungen ermöglicht werden.

Vorzugsweise werden für den ersten Funktionstest zwischen oder während jeder Beleuchtungsphase der Abstandsmessung mehrere Datensätze an Diagnosedaten aufgenommen. Vorzugsweise ist der zumindest eine Signalgenerator dazu ausgebildet, für jede Aufnahme eines Datensatzes an Diagnosedaten unterschiedliche Einstellungen zu verwenden. Zum Beispiel können die Amplitude des Diagnosesignals für den Start und/oder das Ende eines Diagnose-Durchlaufs variiert, insbesondere anwendungsspezifisch gewählt, werden.

Vorzugsweise kann es sich bei dem zumindest einen Empfangspixel um ein differentielles Empfangspixel handeln. Mit anderen Worten kann erreicht werden, dass ein optoelektronische Empfänger mit zumindest einem differentiellen Empfangspixel während seines Betriebs auf seine Funktionstüchtigkeit getestet werden kann.

Das (differentielle) Empfangspixel kann beispielsweise zumindest zwei Speicherelemente (d.h. Ladungsspeicher, Ladungstopf, engl. "charge well") umfassen, welche zeitlich voneinander getrennt angesteuert werden können und je nach Phase der Abstandsmessung zeitversetzt Empfangslicht (z.B. als elektrische Ladung) sammeln und speichern können. Die Speicherelemente können Kondensatoren umfassen. Der Zeitpunkt des Aussendens des Sendelichts und die Zeitpunkte der Ansteuerung der Speicherelemente können zeitlich aufeinander abgestimmt werden. Der Zeitversatz kann eingelernt und zu einem späteren Zeitpunkt in der Verarbeitungskette korrigiert werden, um eine genauere Messung zu ermöglichen. Die Speicherelemente können dann, gleichzeitig oder zeitversetzt, ausgelesen werden, um das (differentielle) Empfangssignal zu erzeugen. Dieser Aufbau des Empfangspixels kann erlauben, die Anfälligkeit des optoelektronischen Empfängers gegenüber Umgebungslicht zu reduzieren, Rauschen in der Abstandsmessung zu reduzieren und den Dynamikbereich des optoelektronischen Empfängers zu verbessern.

Beispielsweise kann das zumindest eine (differentielle) Empfangspixel ein erstes und zweites Speicherelement umfassen. Das erste Speicherelement kann ausgebildet sein, für die Zeitdauer jedes ausgesendeten Pulses des Sendelichts, also von dem Zeitpunkt des Aussendens des Sendelichts an bis zum Zeitpunkt des Endes des Aussendens des Sendlichts, Empfangslicht als elektrische Ladung zu sammeln und zu speichern (d.h. die den reflektierten oder remittierten Pulsen des Sendelichts entsprechende Ladungsmenge). Das zweite Speicherelement kann ausgebildet sein, von dem Zeitpunkt des Endes des Aussendens des Sendlichts an bis zum Zeitpunkt des Aussendens eines nachfolgenden Pulses des Sendelichts Empfangslicht zu sammeln und zu speichern. Der erste Signalanteil des Empfangssignals kann dann durch Auslesen des ersten Speicherelements erzeugt werden und der zweite Signalanteil des Empfangssignals kann durch Auslesen des zweiten Speicherelements erzeugt werden. Der erste und/oder der zweite Signalanteil des Empfangssignals können optional in einem (analogen) Speicher zwischengespeichert und dann gemeinsam ausgegeben werden.

Die Aufnahmerate der Abstandsmessung kann im Bereich von 10 Hz bis 100 Hz liegen. Für die Abstandsmessung können mehrere Einzelmessungen, z.B. neun Einzelmessungen, zusammengeführt werden. Beispielsweise werden bei einer Aufnahmerate von 30 Hz insgesamt 30*9 = 270 Einzelmessungen pro Sekunde durchgeführt. Beispielsweise kann moduliert Sendelicht ausgesendet werden, d.h. für jede Einzelmessung kann eine Vielzahl an Pulsen des Sendelichts ausgesendet werden. In der Beleuchtungsphase der Abstandsmessung können alle Vorgänge umfasst sein, die zusammengenommen notwendig sind, um die Messwerte zu generieren, welche insbesondere in einen gemessenen Abstandswert resultieren.

Bei dem Diagnosesignal kann es sich um ein Stromsignal oder ein Spannungssignal handeln. Dementsprechend kann es sich bei dem Signalgenerator um einen Stromgenerator oder einen Spannungsgenerator handeln. Vorzugsweise umfasst der Signalgenerator einen (programmierbaren) Spannungsgenerator zur Erzeugung eines variablen Spannungssignals. Der Signalgenerator kann einen Digital-zu-Analog-Wandler ("digital-to-analog converter", DAC) umfassen.

Der optoelektronische Empfänger kann von einem Erfassungsbereich (insbesondere von Objekten in dem Erfassungsbereich) reflektiertes oder remittiertes (d.h. diffus reflektiertes) Sendelicht als Empfangslicht empfangen und basierend auf dem empfangenen Empfangslicht mittels des zumindest einen Empfangspixels das Empfangssignal erzeugen. Dabei kann es sich bei dem Empfangssignal um ein differentielles Empfangssignal handeln, welches einen ersten Signalanteil und einen zweiten Signalanteil umfasst, welche über jeweils einen eigenen Ausgang ausgegeben und/oder über separate Leitungen übertragen werden.

Das Sendelicht kann durch einen mit dem optoelektronischen Empfänger gekoppelten und/oder gesteuerten Lichtsender erzeugt und in den Erfassungsbereich ausgesandt werden.

Der optoelektronische Empfänger kann beispielsweise eine Steuerung umfassen, wie zum Beispiel einen Mikroprozessor, einen programmierbaren Zustandsautomaten oder ein Field Programmable Gate Array (FPGA), welche ausgebildet ist, den optoelektronischen Empfänger, und insbesondere die Verbindungseinheit, und bevorzugt auch andere Vorrichtungen, wie zum Beispiel einen Lichtsender und/oder zumindest eine Referenzbeleuchtungseinheit, zu steuern, um den ersten Funktionstest (und/oder auch anderen Funktionstests) durchzuführen. Die Steuerung kann beispielsweise in dem optoelektronischen Empfänger vorinstalliert sein, um generelle Funktionen des Pixelarrays und/oder der Verarbeitungseinheit (und/oder auch anderen Vorrichtungen, wie z.B. einen Lichtsender und/oder eine Referenzbeleuchtungseinheit) zu steuern. Mit anderen Worten kann eine bereits vorhandene Steuerung, die typischerweise für andere Zwecke eingesetzt wird, für die Implementierung des ersten Funktionstests (und/oder anderer Funktionstests) des optoelektronischen Empfängers wiederverwendet werden, sodass keine zusätzliche Steuerung für die Implementierung des ersten Funktionstests (und/oder anderer Funktionstests) vorgesehen werden muss.

In dem optoelektronischen Empfänger können auch mehrere Signalgeneratoren vorhanden sein, also zum Beispiel zwei, drei, vier oder mehr Signalgeneratoren. Beispielsweise kann jeweils zumindest ein Signalgenerator für jede Spalte und/oder Zeile des Pixelarray vorgesehen sein. Jeder der Signalgeneratoren kann anders programmiert sein und beispielsweise ein anderes Diagnosesignal ausgeben.

Gemäß einer Ausführungsform umfasst das zumindest eine Referenzpixel zumindest ein Dunkelpixel, wobei das Pixelarray dazu ausgebildet ist, für einen zweiten Funktionstest, insbesondere für die Aufnahme von Dunkelsignaldaten, durch Auslesen des Dunkelpixels ein Dunkelsignal zu erzeugen und auszugeben, und wobei die Verbindungseinheit dazu ausgebildet ist, das Pixelarray mit der Verarbeitungseinheit in (vor-)bestimmten Zeitabständen zu koppeln, um für den zweiten Funktionstest, insbesondere für die Aufnahme der Dunkelsignaldaten, das Dunkelsignal in die Verarbeitungseinheit zur Signalverarbeitung einzuspeisen. Mit anderen Worten kann das Referenzsignal das Dunkelsignal umfassen; insbesondere kann es sich bei dem Referenzsignal um das Dunkelsignal handeln. Vorzugsweise ist die Verbindungseinheit ausgebildet, für den zweiten Funktionstest das Pixelarray mit der Verarbeitungseinheit (zu vorbestimmten Zeitpunkten) während jeder Beleuchtungsphase der Abstandsmessung und/oder zwischen jeder Beleuchtungsphase der Abstandsmessung zu koppeln. Vorzugsweise ist die Verbindungseinheit ausgebildet, für den zweiten Funktionstest das Pixelarray mit der Verarbeitungseinheit mit der gleichen Aufnahmerate wie die Abstandsmessung zu koppeln. Bei dem Dunkelpixel kann es sich zum Beispiel um ein Pixel handeln, welches außerhalb eines Beleuchtungsbereichs liegt und/oder durch eine Metallisierungsschicht abgedeckt ist. Alternativ kann es sich zum Beispiel um ein Empfangspixel handeln, welches weniger sensitiv für den Empfang von Empfangslicht ist. Die herabgesetzte Sensitivität kann beispielsweise durch eine mechanische Abdeckung, eine Blende, zumindest einen optischen Filter, eine Einschränkung des Beleuchtungsbereichs über das Objektivdesign und/oder durch die Ansteuerung des Pixels (z.B. über eine herabgesetzte Integrationszeit, Änderung der Quanteneffizient oder der Ausleseeffizienz, Variation der Versorgungsspannung oder weiteres) erreicht werden. Bei dem Dunkelsignal kann es sich um ein (temperaturabhängiges) Signal mit einer sehr niedrigen Signalamplitude, insbesondere mit einer Signalamplitude nahe Null, handeln, welches einen, idealerweise von äußeren Einflüssen weitgehend unabhängigen, Referenzpunkt liefert. Vorzugsweise werden für den zweiten Funktionstest zwischen oder während jeder Beleuchtungsphase der Abstandsmessung mehrere Datensätze an Dunkelsignaldaten aufgenommen. Vorzugsweise ist das Pixelarray dazu ausgebildet, für jede Aufnahme eines Datensatzes an Dunkelsignaldaten unterschiedliche Einstellungen, insbesondere unterschiedliche Integrationszeiten für das Auslesen des Dunkelpixels, zu verwenden. Mittels dieses zweiten Funktionstests können Fehler in dem optoelektronischen Empfänger, und insbesondere sowohl in dem Pixelarray als auch in nachgeschalteten Komponenten, wie z.B. die Verbindungseinheit, die Verarbeitungseinheit und/oder eine (optionale) Datenvorverarbeitungseinheit, während des Betriebs des optoelektronischen Empfängers erkannt und die funktionelle Sicherheit des optoelektronischen Empfängers weiter verbessert werden. Das zumindest eine Dunkelpixel kann während des zweiten Funktionstests von äußeren Einflüssen (z.B. Sendelicht anderer Sensoren und/oder Umgebungslicht) weitgehend abgeschirmt sein. Durch den zweiten Funktionstest kann daher überprüft werden, ob der optoelektronische Empfänger unter weitgehendem Ausschluss von äußeren Einflüssen funktionstüchtig ist.

Gemäß einer weiteren Ausführungsform umfasst das zumindest eine Referenzpixel zumindest ein Referenzempfangspixel, welches Referenzlicht empfängt und/oder das zumindest eine Empfangspixel und zumindest ein Dunkelpixel des Pixelarrays voneinander separiert, wobei das Pixelarray dazu ausgebildet ist, für einen dritten Funktionstest, insbesondere für die Aufnahme von ersten Referenzdaten, durch Auslesen des Referenzempfangspixels ein erstes Referenzsignal zu erzeugen und auszugeben, wobei die Verbindungseinheit dazu ausgebildet ist, das Pixelarray mit der Verarbeitungseinheit in (vor-)bestimmten Zeitabständen zu koppeln, um für den dritten Funktionstest, insbesondere für die Aufnahme der ersten Referenzdaten, das erste Referenzsignal in die Verarbeitungseinheit zur Signalverarbeitung einzuspeisen. Mit anderen Worten kann das Referenzsignal das erste Referenzsignal umfassen; insbesondere kann es sich bei dem Referenzsignal um das erste Referenzsignal handeln. Vorzugsweise ist die Verbindungseinheit ausgebildet, für den dritten Funktionstest das Pixelarray mit der Verarbeitungseinheit (zu vorbestimmten Zeitpunkten) während jeder Beleuchtungsphase der Abstandsmessung und/oder zwischen jeder Beleuchtungsphase der Abstandsmessung zu koppeln. Vorzugsweise ist die Verbindungseinheit ausgebildet, für den dritten Funktionstest das Pixelarray mit der Verarbeitungseinheit mit der gleichen Aufnahmerate wie die Abstandsmessung zu koppeln. Bei dem zumindest einen Referenzempfangspixel kann es sich beispielsweise um ein Pixel handeln, welches zwischen dem zumindest einen Empfangspixel und dem Dunkelpixel angeordnet ist. Das Referenzempfangspixel kann dabei zum Beispiel auch als "Pufferpixel" bezeichnet werden. Das Referenzempfangspixel kann vorteilhafterweise das zumindest eine Empfangspixel und das zumindest eine Dunkelpixel voneinander separieren, um zum Beispiel eine gegenseitige Beeinflussung (auf Englisch "crosstalk") zwischen dem zumindest einen Empfangspixel und dem zumindest einen Dunkelpixel zu verringern oder zu vermeiden. Das Referenzempfangspixel kann für den Empfang von Empfangslicht und die Erzeugung des Empfangssignals unbrauchbar sein, jedoch trotzdem für den zweiten Funktionstest verwendbar sein. Zusätzlich oder alternativ kann das Referenzempfangspixel dazu ausgebildet sein, (nur) auf den Bereich des Referenzempfangspixels fokussiertes Referenzlicht für die Erzeugung des ersten Referenzsignals zu empfangen. Das Referenzlicht kann z.B. durch eine dafür vorgesehene Referenzbeleuchtungseinheit erzeugt oder durch eine Referenzlichtoptik dem Referenzempfangspixel zugeführt werden. Das erste Referenzsignal kann zum Beispiel eine Signalamplitude größer Null aufweisen. Die Signalamplitude des ersten Referenzsignals kann größer sein als die Signalamplitude des Dunkelsignals. Vorzugsweise werden für den dritten Funktionstest zwischen oder während jeder Beleuchtungsphase der Abstandsmessung mehrere Datensätze an ersten Referenzdaten aufgenommen.

Vorzugsweise ist das Pixelarray dazu ausgebildet, für jede Aufnahme eines Datensatzes an ersten Referenzdaten unterschiedliche Einstellungen, insbesondere unterschiedliche Beleuchtungszeiten für das Referenzempfangspixel und/oder unterschiedliche Integrationszeiten für das Auslesen des Referenzempfangspixels, zu verwenden. Ebenfalls kann der optoelektronische Empfänger dazu ausgebildet sein, für jede Aufnahme eines Datensatzes an ersten Referenzdaten unterschiedliche Einstellungen, insbesondere unterschiedliche Frequenzen für das Referenzlicht und/oder unterschiedliche Phasenlagen zwischen dem Referenzlicht und dem Referenzempfangspixel zu verwenden. Mittels dieses dritten Funktionstests können Fehler in dem optoelektronischen Empfänger, und insbesondere sowohl in dem Pixelarray als auch in nachgeschalteten Komponenten, wie z.B. die Verbindungseinheit, die Verarbeitungseinheit und/oder eine (optionale) Datenvorverarbeitungseinheit, während des Betriebs des optoelektronischen Empfängers erkannt und die funktionelle Sicherheit des optoelektronischen Empfängers weiter verbessert werden. Das zumindest eine Referenzempfangspixel kann während des dritten Funktionstests möglicherweise auch durch äußere Einflüsse (z.B. Sendelicht anderer Sensoren und/oder Umgebungslicht) beeinträchtigt werden. Durch den dritten Funktionstest kann daher überprüft werden, ob der optoelektronische Empfänger auch unter äußeren Einflüssen funktionstüchtig ist.

Es versteht sich, dass der erste, zweite und dritte Funktionstest auch in jeder Kombination in dem optoelektronischen Empfänger implementiert sein können. Beispielsweise kann anstelle des ersten Funktionstests der zweite und/oder dritte Funktionstest in dem optoelektronischen Empfänger implementiert sein. Vorteilhafterweise kann die Kombination mehrerer der Funktionstests, insbesondere aller Funktionstests, erlauben, den optoelektronischen Empfänger, insbesondere das Pixelarray, die Verbindungseinheit, die Verarbeitungseinheit und/oder eine (optionale) Datenvorverarbeitungseinheit, über den gesamten Dynamikbereich zu testen und dadurch die Sicherheit des optoelektronischen Empfängers noch weiter zu verbessern.

Gemäß einer weiteren Ausführungsform sind die Komponenten des optoelektronischen Empfängers, insbesondere der Signalgenerator, für eine Kalibrierung, und insbesondere initiale Kalibrierung, des optoelektronischen Empfängers ausgebildet und/oder vorinstalliert. Auf diese Weise können die Komponenten des optoelektronischen Empfängers für mehrere verschiedene Zwecke und damit effizienter genutzt werden. Gleichzeitig können zusätzliche Hardware-Strukturen, die beispielsweise für die Bereitstellung des Diagnosesignals notwendig gewesen wären, eingespart werden. So kann insgesamt die Effizienz und/oder Leistungsfähigkeit des optoelektronischen Empfängers, insbesondere im Hinblick auf seine funktionelle Sicherheit, erhöht werden. Vorzugsweise kann die Verwendbarkeit eines herkömmlichen Empfängers für Sicherheitsanwendungen erreicht werden.

Gemäß einer weiteren Ausführungsform ist das Diagnosesignal statisch oder veränderbar.

Gemäß einer weiteren Ausführungsform ist der Signalgenerator ausgebildet, während eines Diagnose-Durchlaufs (d.h. eines sogenannten "Sweeps") die Amplitude des Diagnosesignals zu verändern. Der erste Funktionstest kann somit den Diagnose-Durchlauf umfassen; insbesondere kann es sich bei dem ersten Funktionstest um den Diagnose-Durchlauf handeln. Auf diese Weise kann der optoelektronische Empfänger, und insbesondere die Verarbeitungseinheit, in einem Diagnose-Durchlauf über den gesamten Dynamikbereich des optoelektronischen Empfängers getestet werden, was den Grad an Diagnosedeckung erhöhen kann. Insbesondere können verschiedene Komponenten und komplexe Funktionen der Verarbeitungseinheit auf einfache und flexible Weise überprüft und/oder überwacht werden. Beispielsweise können Single-Ended-Sättigungskomparatoren (falls vorhanden), eine (analoge) korrelierte Doppelabtastungs("Correlated Double Sampling", CDS)-Funktion eines Verstärkers und seiner Schaltungen, Verstärkungsauswahlkomparatoren, verschiedene Verstärkungseinstellungen des Verstärkers und ein Analog-zu-Digital-Wandler ("analog-to-digital converter", ADC) über den gesamten Dynamikbereich bis zur Sättigung überprüft und/oder überwacht werden.

Gemäß einer weiteren Ausführungsform ist der Signalgenerator ausgebildet, in dem Diagnose-Durchlauf den gesamten Dynamikbereich des optoelektronischen Empfängers, bevorzugt einschließlich von Single-Ended-Sättigung und/oder Sättigung einer Analog-zu Digital-Wandlung, d.h. ADC-Sättigung, zu testen. Mit Single-Ended-Sättigung kann gemeint sein, dass die Amplitude des Diagnosesignals einer Sättigung eines Speicherelements des Empfangspixels entspricht.

Gemäß einer weiteren Ausführungsform ist der Signalgenerator ausgebildet, während des Diagnose-Durchlaufs unterschiedliche Steigungen für die Änderung der Amplitude des Diagnosesignals zu verwenden. Die Steigung, mit der auch eine Schrittweite gemeint sein kann, kann in Abhängigkeit von der Verstärkungseinstellung eines Verstärkers der Verarbeitungseinheit gewählt werden oder umgekehrt. Die Verwendung unterschiedlicher Steigungen bzw. unterschiedlicher Schrittweiten kann erlauben, eine dichtere Abtastung für schwache Signale (und z.B. höhere Signalverstärkung) und gleichzeitig einen großen Dynamikbereich für stärkere Signale (und z.B. niedrigere Signalverstärkung) bereitzustellen. In anderen Worten kann eine höhere Anzahl von Abtastungspunkten innerhalb eines bestimmten Signalbereichs erreicht werden. Zudem kann eine anwendungsspezifische Diagnose des optoelektronischen Empfängers ermöglicht werden.

Gemäß einer weiteren Ausführungsform werden bei einer Überwachung zumindest einer anderen Komponente des optoelektronischen Empfängers erzeugte Testdaten durch die Diagnosedaten ersetzt. Beispielsweise kann es sich bei der anderen Komponente um einen Verstärker handeln. Durch die (bekannten) Diagnosedaten kann bekannt sein, welche Daten der Verstärker ausgeben müsste, sodass auf diese Weise der Verstärker überprüft werden kann. In der Folge kann die Ausgabe und/oder Weiterverarbeitung der von dem optoelektronischen Empfänger erzeugten Daten zuverlässiger sein.

Gemäß einer weiteren Ausführungsform werden die Diagnosedaten und die Dunkelsignaldaten, die ersten Referenzdaten und/oder echte Messdaten in zumindest einem kombinierten Ausgabebild zusammengeführt. Ebenfalls ist vorstellbar, dass, falls zutreffend, auch die mehreren Datensätze an Diagnosedaten und die mehreren Datensätze an Dunkelsignaldaten, die mehreren Datensätze an ersten Referenzdaten und/oder echte Messdaten in zumindest einem kombinierten Ausgabebild zusammengeführt werden können.

Gemäß einer weiteren Ausführungsform werden während des Diagnose-Durchlaufs mehrere kombinierte Ausgabebilder (z.B. ein Stapel an Ausgabebilder) erzeugt (und ausgegeben). Zum Beispiel können bei der Erzeugung der mehreren kombinierten Ausgabebilder unterschiedliche Start und/oder Endpunkte und/oder unterschiedliche Schrittgrößen des eingespeisten Diagnosesignals berücksichtigt und dadurch eine bessere Abdeckung des Eingangs-/Ausgangssignals und/oder eine anwendungsspezifischere Abdeckung erreicht werden.

Gemäß einer weiteren Ausführungsform werden während des Diagnose-Durchlaufs aufgenommene Diagnosedaten stückweise an die echten Messdaten angefügt, um die mehreren kombinierten Ausgabebilder zu erzeugen (und auszugeben). Durch die Erzeugung mehrerer Ausgabebilder kann die Weiterverarbeitung der Ausgabebilder erleichtert werden, insbesondere eine schrittweise Weiterverarbeitung realisiert werden.

Die Weiterverarbeitung bzw. Analyse der Diagnosedaten in den Ausgabebildern durch einen nachgelagerten Prozessor, FPGA und/oder SoC, also z.B. die hier erwähnte Datenverarbeitungseinheit, kann dadurch frühzeitig starten und zumindest zum Teil bereits dann erfolgen während die Datenverarbeitungseinheit ohnehin noch auf die übrigen Ausgabebilder und damit auf den vollständigen Messdatensatz warten muss. Nach Erhalt des vollständigen Messdatensatzes kann dann die Tiefenkarte aus den Rohdaten berechnet werden kann. Dadurch wird die Rechenlast und ggf. Beanspruchung von Speicherbandbreite durch die Datenverarbeitungseinheit zeitlich besser verteilt und die Auswertung der Diagnosedaten reduziert nicht die verfügbare Rechenleistung für z.B. die Erstellung der Tiefenkarte durch die Datenverarbeitungseinheit.

Ein Vorteil der Erzeugung von kombinierten Ausgabebildern ist, dass die gesamte benötigte Zeit, die der optoelektronische Empfänger z.B. für jede Abstandsmessung bzw. pro Frame aktiv ist und damit Strom verbraucht, verkürzt werden kann, da zusätzlicher Zeitaufwand für das Vorbereiten und/oder Starten der Bildaufnahme des Diagnosebildes entfällt, da ja lediglich das Ausgabebild für die echten Messdaten (Live-Messdaten-Bild) durch z.B. zusätzliche Zeilen von Diagnosedaten vergrößert wird. Dieser zeitliche Offset kann daher entfallen.

Gemäß einer weiteren Ausführungsform umfasst das Pixelarray einen ersten Ausgang (beispielsweise ein Ausgangsterminal) für die Ausgabe eines ersten Signalanteils des Empfangssignals und einen (von dem ersten Ausgang separaten) zweiten Ausgang für die Ausgabe eines zweiten Signalanteils des Empfangssignals, wobei ein erster Eingang der Verbindungseinheit mit dem ersten Ausgang des Pixelarrays und ein zweiter Eingang der Verbindungseinheit mit dem zweiten Ausgang des Pixelarrays verbunden ist. Insbesondere kann der erste Eingang der Verbindungseinheit mit dem ersten Ausgang des Pixelarrays und der zweite Eingang der Verbindungseinheit mit dem zweiten Ausgang des Pixelarrays so, direkt oder indirekt, verbunden sein, dass der erste Signalanteil und der zweite Signalanteil des Empfangssignals in die Verbindungseinheit und folglich in die Verarbeitungseinheit eingespeist werden kann.

Gemäß einer weiteren Ausführungsform umfasst der optoelektronische Empfänger einen ersten Signalgenerator zur Erzeugung eines ersten Diagnosesignals und einen zweiten Signalgenerator zur Erzeugung eines zweiten Diagnosesignals, wobei die Verbindungseinheit mit dem ersten Ausgang des Pixelarrays, dem zweiten Ausgang des Pixelarrays, dem ersten Signalgenerator, dem zweiten Signalgenerator, einem ersten Eingang der Verarbeitungseinheit und einem zweiten Eingang der Verarbeitungseinheit verbunden ist und dazu ausgebildet ist, wahlweise den ersten und zweiten Ausgang des Pixelarrays mit dem ersten und zweiten Eingang der Verarbeitungseinheit oder den ersten und zweiten Signalgenerator mit dem ersten und zweiten Eingang der Verarbeitungseinheit zu koppeln. In der Folge kann wahlweise einerseits der erste und zweite Signalanteil des Empfangssignals (und/oder das Referenzsignal) oder andererseits das erste und zweite Diagnosesignal in die Verarbeitungseinheit zur Signalverarbeitung eingespeist werden.

Es versteht sich, dass die Verbindungseinheit dazu ausgebildet sein kann, für den ersten Funktionstest, insbesondere für die Aufnahme der Diagnosedaten, den ersten Signalgenerator mit dem ersten Eingang der Verarbeitungseinheit und den zweiten Signalgenerator mit dem zweiten Eingang der Verarbeitungseinheit in (vor-)bestimmten Zeitabständen zu koppeln. Ein erster Ausgang der Verbindungseinheit kann mit dem ersten Eingang der Verarbeitungseinheit und ein zweiter (von dem ersten Ausgang separater) Ausgang der Verbindungseinheit kann mit dem zweiten Eingang der Verarbeitungseinheit verbunden sein.

Vorzugsweise ist das erste Diagnosesignal von dem zweiten Diagnosesignal verschieden, und weist beispielsweise eine andere Amplitude auf.

Gemäß eine weiteren Ausführungsform ist der erste Eingang der Verbindungseinheit sowohl mit dem ersten als auch mit dem zweiten Signalgenerator (für die Einspeisung des ersten bzw. zweiten Diagnosesignals) verbunden und der zweite Eingang der Verbindungseinheit sowohl mit dem ersten als auch mit dem zweiten Signalgenerator (für die Einspeisung des ersten bzw. zweiten Diagnosesignals) verbunden.

Gemäß einer weiteren Ausführungsform ist Verbindungseinheit dazu ausgebildet, für den ersten Funktionstest, insbesondere für die Aufnahme der Diagnosedaten, vorzugsweise abwechselnd, den ersten Signalgenerator mit dem ersten Eingang der Verarbeitungseinheit und den zweiten Signalgenerator mit dem zweiten Eingang der Verarbeitungseinheit oder den ersten Signalgenerator mit dem zweiten Eingang der Verarbeitungseinheit und den zweiten Signalgenerator mit dem ersten Eingang der Verarbeitungseinheit zu koppeln. Mit anderen Worten kann für den ersten Funktionstest entweder der erste Signalanteil des Empfangssignals mit dem ersten Diagnosesignal und der zweite Signalanteil des Empfangssignals mit dem zweiten Diagnosesignal oder der erste Signalanteil des Empfangssignals mit dem zweiten Diagnosesignal und der zweite Signalanteil des Empfangssignals mit dem ersten Diagnosesignal, vorzugsweise abwechselnd, für die folgende Signalverarbeitung ersetzt werden. Durch diesen Aufbau des optoelektronischen Empfängers (und insbesondere durch die Verbindung der Eingänge der Verbindungseinheit jeweils sowohl zu dem ersten als auch zu dem zweiten Signalgenerator) und durch die abwechselnde Kopplung kann der Dynamikbereich (und vorzugsweise der volle Dynamikbereich) des optoelektronischen Empfängers mit geringerer Anzahl, beispielsweise der halben Anzahl, von Signalgeneratoreinstellungen (innerhalb eines Diagnose-Durchlaufs) abgedeckt bzw. überprüft werden.

Die Verbindungseinheit kann zum Beispiel einen ersten Multiplexer umfassen, welcher folgendes umfasst: einen ersten Eingang, welcher mit dem ersten Ausgang des Pixelarrays für die Einspeisung des ersten Signalanteils des Empfangssignals (und/oder des Referenzsignals) des Pixelarrays verbunden ist, einen zweiten Eingang, welcher mit dem ersten Signalgenerator für die Einspeisung des ersten Diagnosesignals verbunden ist, einen dritten Eingang, welcher mit dem zweiten Signalgenerator für die Einspeisung des zweiten Diagnosesignals verbunden ist, und einen Ausgang für die Ausgabe des ersten Diagnosesignals, des zweiten Diagnosesignals oder des ersten Signalanteils des Empfangssignals (und/oder des Referenzsignals). Ferner kann die Verbindungseinheit einen zweiten Multiplexer umfassen, welcher folgendes umfasst: einen ersten Eingang, welcher mit dem zweiten Ausgang des Pixelarrays für die Einspeisung des zweiten Signalanteils des Empfangssignals (und/oder des Referenzsignals) verbunden ist, einen zweiten Eingang, welcher mit dem ersten Signalgenerator für die Einspeisung des ersten Diagnosesignals verbunden ist, einen dritten Eingang, welcher mit dem zweiten Signalgenerator für die Einspeisung des zweiten Diagnosesignals verbunden ist, und einen Ausgang für die Ausgabe des ersten Diagnosesignals, des zweiten Diagnosesignals oder des zweiten Signalanteils des Empfangssignals (und/oder des Referenzsignals), wobei der erste Multiplexer und der zweite Multiplexer dazu ausgebildet sein können, für den ersten Funktionstest, insbesondere für die Aufnahme der Diagnosedaten, gleichzeitig das erste Diagnosesignal und das zweite Diagnosesignal auszugeben, wobei der erste Multiplexer das erste Diagnosesignal und der zweite Multiplexer das zweite Diagnosesignal ausgeben kann oder umgekehrt. Vorzugsweise wechseln sich der erste Multiplexer und der zweite Multiplexer bei der Ausgabe des ersten Diagnosesignals und des zweiten Diagnosesignals ab. Es versteht sich, dass der erste und der zweite Multiplexer auch mehr als drei Eingänge und mehr als einen Ausgang umfassen können. Zudem können auch mehr als zwei Multiplexer, also zum Beispiel auch drei, vier oder mehr Multiplexer vorhanden sein.

Gemäß einer weiteren Ausführungsform definieren das erste Diagnosesignal und das zweite Diagnosesignal an den Ausgängen der Verbindungseinheit und/oder an den Eingängen der Verarbeitungseinheit in Bezug auf oder durch die Verarbeitungseinheit ein differentielles Diagnosesignal, wobei das differentielle Diagnosesignal je nach Kopplungseinstellung der Verbindungseinheit eine positive oder eine negative Polarität aufweist.

Gemäß einer weiteren Ausführungsform ist die Verbindungseinheit dazu ausgebildet, die Polarität des differentiellen Diagnosesignals zu invertieren, und bevorzugt mehrfach während des Diagnose-Durchlaufs zu invertieren.

Gemäß einer weiteren Ausführungsform ist/sind das erste und/oder das zweite Diagnosesignal statisch oder veränderbar.

Gemäß einer weiteren Ausführungsform ist/sind der erste und/oder zweite Signalgenerator dazu ausgebildet, während des Diagnose-Durchlaufs die Amplitude des ersten und/oder zweiten Diagnosesignals zu verändern. Vorzugsweise sind der erste und der zweite Signalgenerator dazu ausgebildet, während des Diagnose-Durchlaufs die Amplitude des ersten Diagnosesignals und die Amplitude des zweiten Diagnosesignals abwechselnd zu verändern, d.h. das eine Diagnosesignal wird verändert während das andere vorerst konstant bleibt, um dann in der nächsten Runde verändert zu werden.

Beispielsweise kann die Verbindungseinheit erlauben, durch Umschaltung in der Kopplung mit dem ersten oder dem zweiten Signalgenerator die Polarität des eingespeisten differentiellen Diagnosesignals zu vertauschen. Auf diese Weise kann in einem einzigen Diagnose-Durchlauf der gesamte Dynamikbereich beider Polaritäten mit kleinerer Anzahl an erzeugten Diagnosesignalwerten, und zum Beispiel nur mit der halben Anzahl an erzeugten Diagnosesignalwerten, überprüft bzw. abgedeckt werden. Die Signalgeneratoren müssen, jeweils für sich allein gesehen, nicht den gesamten Differenzbereich abdecken, da der Polaritätstausch bzw. die Polaritätsumschaltung die Prüfung eines Diagnosesignals mit invertierter Polarität ermöglicht, ohne dass (bezogen auf jeden einzelnen Signalgenerator) der gesamte Dynamikbereich beider Polaritäten durchlaufen werden muss.

Gemäß einer Ausführungsform ist/sind der erste und/oder zweite Signalgenerator dazu ausgebildet, in dem Diagnose-Durchlauf den gesamten Dynamikbereich des optoelektronischen Empfängers, bevorzugt einschließlich von Single-Ended-Sättigung und/oder ADC-Sättigung, zu testen.

Gemäß einer weiteren Ausführungsform ist/sind der erste und/oder zweite Signalgenerator dazu ausgebildet, während des Diagnose-Durchlaufs unterschiedliche Steigungen (insbesondere unterschiedliche Schrittweiten) für die Änderung der Amplitude des ersten und/oder zweiten Diagnosesignals zu verwenden. Insbesondere kann eine Steuerung vorhanden sein, die den ersten und/oder zweiten Signalgenerator so steuert, dass sich die unterschiedlichen Steigungen für die Änderung der Amplitude des ersten und/oder zweiten Diagnosesignals ergeben. Durch Auswahl der Startwerte und Steigungen kann es ermöglicht sein, dass einer der beiden Signalgeneratoren für den Diagnose-Durchlauf nicht variiert werden muss, was den Diagnose-Durchlauf vereinfachen kann.

Gemäß einer weiteren Ausführungsform umfasst die Verarbeitungseinheit zumindest einen Verstärker, insbesondere Differenzverstärker, zur Signalverstärkung. Der Verstärker kann einen ersten Eingang und einen zweiten Eingang umfassen, wobei zum Beispiel der erste Eingang des Verstärkers mit dem Ausgang des ersten Multiplexers verbunden sein kann und der zweite Eingang des Verstärkers mit dem Ausgang des zweiten Multiplexers verbunden sein kann. Der Verstärker kann beispielsweise ein programmierbarer Differenzverstärker sein. Der Verstärker kann ein programmierbarer Differenzverstärker mit differentiellem Ausgang sein. Der Verstärker kann ausgebildet sein, analoge korrelierte Doppelabtastung ("Correlated Double Sampling", CDS), Verstärker-Offset-Auslöschung ("amplifier offset cancellation") und/oder Pixel-Zurücksetzungs-Spannungssubtraktion ("pixel reset voltage subtraction") bereitzustellen.

Gemäß einer weiteren Ausführungsform umfasst die Verarbeitungseinheit einen Analog-zu-Digital-Wandler ("analog-to-digital converter", ADC). Vorzugsweise ist der Verstärker ausgangsseitig (direkt oder indirekt) mit dem Analog-zu-Digital-Wandler verbunden. Zum Beispiel können die Verbindungseinheit mit den zwei Multiplexern, der Verstärker und der Analog-zu-Digital-Wandler in Reihe geschaltet sein. Der Analog-zu-Digital-Wandler kann beispielsweise einen Analog-zu-Digital-Wandler mit differentiellem Eingang umfassen.

Der optoelektronische Empfänger kann optional eine (programmierbare) Datenvorverarbeitungseinheit umfassen, welche ausgebildet ist, ein Ausgangssignal des Analog-zu-Digital-Wandlers des optoelektronischen Empfängers zu verarbeiten, und insbesondere eine Normalisierung verschiedener Verstärkungseinstellungen des Verstärkers der Verarbeitungseinheit und/oder eine Formatkonvertierung des digitalen Ausgangssignals des Analog-zu-Digital-Wandlers bereitzustellen, und vorzugsweisen eine Formatkonvertierung digitaler Daten basierend auf dem digitalen Ausgangssignals des Analog-zu-Digital-Wandlers vor Übertragung an eine nachgeschaltete Datenverarbeitungseinheit bereitzustellen. Es versteht sich, dass mittels der hierin beschriebenen Vorgehensweisen und des Aufbaus und der Konfiguration des optoelektronischen Empfängers auch Fehler in der Datenvorverarbeitungseinheit während des Betriebs des optoelektronischen Empfängers erkannt werden können, da z.B. Unterschiede zwischen von der Datenvorverarbeitungseinheit fehlerhaft vorverarbeitete Diagnosedaten und erwartungsgemäß vorverarbeiteten Diagnosedaten feststellbar sind.

Gemäß einer weiteren Ausführungsform umfasst die Verarbeitungseinheit ferner zumindest einen Verstärkungsauswahlkomparator, welcher mit dem Verstärker verbunden ist und ausgebildet ist, das Empfangssignal, das Referenzsignal oder das Diagnosesignal, insbesondere das differentielle Diagnosesignal, mit zumindest einem Verstärkungsauswahlschwellenwert zu vergleichen, sodass die Verstärkung des Verstärkers basierend auf einem Ausgangssignal des Verstärkungsauswahlkomparators ausgewählt werden kann. Der Verstärkungsauswahlkomparator kann ein volldifferentieller Verstärkungsauswahlkomparator sein. Die auswählbaren Verstärkungsfaktoren können programmierbar sein. Die Anzahl der Verstärkungsauswahlkomparatoren kann von der zur Auswahl stehenden Verstärkungsfaktoren abhängen und mit diesen skalieren. Der zumindest eine Verstärkungsauswahlschwellenwert kann kalibrationsabhängig sein und/oder (z.B. durch eine Steuerung) programmiert werden. Der zumindest eine Verstärkungsauswahlschwellenwert kann beispielsweise mittels zumindest eines DAC erzeugt werden.

Zum Beispiel kann die Verarbeitungseinheit zumindest einen ersten und einen zweiten Verstärkungsauswahlkomparator (beispielsweise zwei volldifferentielle Verstärkungsauswahlkomparatoren) umfassen, welche mit dem Verstärker verbunden sind und ausgebildet sind, das (differentielle) Empfangssignal oder das (differentielle) Diagnosesignal (oder auch andere Signale wie z.B. das Referenzsignal) mit einem ersten, insbesondere negativen, Verstärkungsauswahlschwellenwert und einem zweiten, insbesondere positiven, Verstärkungsauswahlschwellenwert zu vergleichen, sodass die Verstärkung des Verstärkers basierend auf einem Ausgangssignal der Verstärkungsauswahlkomparatoren ausgewählt werden kann. Die absoluten Beträge des ersten und zweiten Verstärkungsauswahlschwellenwertes können gleich oder verschieden voneinander sein. Vorzugsweise sind die Beträge gleich. Mit anderen Worten kann für jede Polarität eines Verstärkungsauswahlschwellenwertes (bzw. seines Betrags) ein Verstärkungsauswahlkomparator vorhanden sein. Auf diese Weise kann ein Unterschreiten des Verstärkungsauswahlschwellenwertes mit negativer Polarität und ein Überschreiten des Verstärkungsauswahlschwellenwertes mit positiver Polarität erkannt werden, um in der Folge den Verstärkungsfaktor umzuschalten. Die Signalanteile des (differentiellen) Empfangssignals bzw. des (differentiellen) Diagnosesignals können an die Verstärkungsauswahlkomparatoren vertauschbar herangeführt werden, d.h. in einen Eingang eines jeden Verstärkungsauswahlkomparators kann der erste Signalanteil des Empfangssignals oder eines der Diagnosesignale und in einen anderen Eingang des Verstärkungsauswahlkomparators der zweite Signalanteil des Empfangssignal beziehungsweise das andere Diagnosesignal eingespeist werden oder umgekehrt. Auf diese Weise kann, insbesondere bei einer Vertauschung der Polarität des differentiellen Diagnosesignals, der gleiche Verstärkungsauswahlschwellenwert verwendet werden.

Gemäß einer weiteren Ausführungsform umfasst das Pixelarray eine Vielzahl von Empfangspixeln, wobei die Vielzahl von Empfangspixeln in Spalten und/oder Zeilen angeordnet sind. Zum Beispiel kann das Pixelarray 512 oder 1024 Spalten und 512 beziehungsweise 1024 Zeilen an Empfangspixeln aufweisen. Beispielsweise kann für jedes (differentielle) Empfangspixel des Pixelarray jeweils ein erster Ausgang für die Ausgabe eines ersten Signalanteils des Empfangssignals (des jeweiligen Empfangspixels) und jeweils ein zweiter Ausgang für die Ausgabe eines zweiten Signalanteils des Empfangssignals (des jeweiligen Empfangspixels) vorhanden sein. Vorzugsweise ist für jede Spalte und/oder Zeile des Pixelarrays jeweils ein erster Ausgang für die Ausgabe eines ersten Signalanteils eines (differentiellen) Empfangssignals (der jeweiligen Spalte oder Zeile) und ein jeweils ein zweiter Ausgang für die Ausgabe eines zweiten Signalanteils des (differentiellen) Empfangssignal (der jeweiligen Spalte oder Zeile) vorhanden.

Gemäß einer weiteren Ausführungsform ist jeweils eine Verbindungseinheit und eine Verarbeitungseinheit für jede einzelne Spalte und/oder Zeile des Pixelarrays vorgesehen. Alternativ können jeweils eine Verbindungseinheit und eine Verarbeitungseinheit für mehrere Spalten und/oder Zeilen zusammengenommen und/oder nur für bestimmte Spalten und/oder Zeilen vorgesehen sein. Mit anderen Worten können die Verbindungseinheit und die Verarbeitungseinheit, und insbesondere der Verstärker, von mehreren Spalten und/oder Zeilen des Pixelarrays geteilt werden, was eine effiziente Nutzung der Hardware-Komponenten erlauben kann. Das Vorsehen von jeweils einer Verbindungseinheit und einer Verarbeitungseinheit nur für bestimmte Spalten und/oder Zeilen des Pixelarrays kann erlauben, bei dem ersten Funktionstest gezielt nur die von den bestimmten Spalten und/oder Zeilen des Pixelarrays erzeugten echten (Live-)Messdaten mit den Diagnosedaten zu ersetzen. Vorzugsweise werden Spalten und/oder Zeilen des Pixelarrays für den ersten Funktionstest ausgewählt, welche (ohnehin) für die Abstandsmessung ungeeignet sind, also zum Beispiel Spalten und/oder Zeilen an den Rändern des Pixelarrays, welche unter Umständen nicht ausreichend beleuchtet werden können. Ferner können auch andere Testbilder oder Testdaten, die der Überwachung anderer Strukturen des optoelektronischen Empfängers dienen, mit den Diagnosedaten ersetzt werden, wie bereits erwähnt. Vorzugsweise wird das in die Verbindungseinheit und/oder Verarbeitungseinheit einer Spalte und/oder Zeile eingespeiste Diagnosesignal während des Auslesens der Spalte und/oder Zeile (durch Umprogrammierung des zugehörigen Signalgenerators) verändert. Dadurch können noch dynamischere Diagnosedaten erhalten werden.

Gemäß einer weiteren Ausführungsform wird dasselbe Diagnosesignal für mehrere Spalten und/oder Zeilen verwendet. Die Verwendung desselben Diagnosesignals für mehrere Spalten und/oder Zeilen kann eine Mittelwertbildung von mehreren Messungen (d.h. mehrerer Spalten und/oder Zeilen) ermöglichen, was das Rauschen vor der Datenverarbeitung reduzieren kann. Des Weiteren kann die Verwendung desselben Diagnosesignals für mehrere Zeilen und/oder Spalten mit dem hierin beschriebenen Polaritätstausch kombiniert werden, z.B. für jede zweite Zeile des Pixelarrays. Die Verwendung desselben Diagnosesignals für mehrere Zeilen und/oder Spalten kann auch relevant sein, wenn Hardware-Ressourcen, wie zum Beispiel ein Verstärker, zwischen mehreren Spalten des Pixelarrays geteilt werden und/oder die Bildbreite des Testbildes geringer ist als die Anzahl der Spalten.

Gemäß einer weiteren Ausführungsform umfasst das Pixelarray eine Vielzahl von Referenzpixeln. Vorzugsweise sind die Referenzpixel in Spalten und/oder Zeilen angeordnet. Vorzugsweise umfasst die Vielzahl von Referenzpixeln eine Vielzahl von Dunkelpixeln und/oder eine Vielzahl von Referenzempfangspixeln.

Weiterer Gegenstand der Erfindung ist ein optoelektronischer Sensor, insbesondere ein optoelektronischer Sensor für Abstandsmessung mittels (Licht-)Laufzeitverfahren, bevorzugt zur Anwendung in einer Industrieanlage und/oder für Sicherheitsanwendungen, umfassend zumindest einen hierin beschriebenen optoelektronischen Empfänger und zumindest einen (insbesondere optoelektronischen) Lichtsender zum Aussenden von Sendelicht.

Bei dem optoelektronischen Sensor handelt es sich vorzugsweise um einen Sicherheitssensor. Vorzugsweise umfasst der optoelektronische Sensor nur einen optoelektronischen Empfänger.

Der optoelektronische Sensor kann zum Beispiel eine Stromversorgung umfassen.

Der optoelektronische Sensor kann zum Beispiel einen Laserscanner oder ein Kamerasystem für Abstandsmessung mittels (Licht-)Laufzeitverfahren umfassen.

Der Lichtsender kann beispielsweise zumindest einen Laserstrahl aussenden.

Der Lichtsender kann ausgebildet sein, Sendelicht in einen Erfassungsbereich in einer Industrieanlage auszusenden. Das Sendelicht kann dann von dem Erfassungsbereich, und insbesondere von Gegenständen in dem Erfassungsbereich, reflektiert und/oder remittiert werden und als zu dem optoelektronischen Empfänger zurückgeworfenes Empfangslicht von dem optoelektronischen Empfänger empfangen werden. Anhand des erzeugten und ausgegebenen Empfangssignals können dann Abstandswerte der Gegenstände (relativ zu dem optoelektronischen Sensor) bestimmt werden.

Gemäß einer Ausführungsform umfasst der optoelektronische Sensor ferner zumindest eine Referenzbeleuchtungseinheit zum Aussenden von Referenzlicht, das innerhalb des optoelektronischen Empfängers auf das Pixelarray, insbesondere das zumindest eine Empfangspixel, geführt ist. Vorzugsweise ist das Referenzlicht (direkt) über ein Kopplungselement, insbesondere über mindestens einen reflektierenden Bereich und/oder einen Lichtleiter, auf das Pixelarray, insbesondere das zumindest eine Empfangspixel, geführt.

Gemäß einer weiteren Ausführungsform ist das Referenzlicht mit derselben Modulationsfrequenz moduliert wie das von dem Lichtsender ausgesendete Sendelicht. Überdies kann das Referenzlicht auch bezüglich des Duty-Cycles, der Integrationszeit und/oder bezüglich des Phasenversatzes zur Pixel-Modulation mit dem vom Lichtsender ausgesendeten Sendelicht übereinstimmen. Auf diese Weise kann die Umsetzung der vorgenannten Beleuchtungscharakteristika durch den optoelektronischen Empfänger geprüft werden. Dabei kann die Phasenlage bzw. der Phasenversatz sich auf den zeitlichen Unterschied zwischen Beleuchtung und Abtastung im Pixel beziehen.

Gemäß einer weiteren Ausführungsform ist das Pixelarray dazu ausgebildet, für einen vierten Funktionstest, insbesondere für die Aufnahme von zweiten Referenzdaten, basierend auf mittels des zumindest einen Empfangspixels empfangenem Referenzlicht ein zweites Referenzsignal zu erzeugen und auszugeben, und die Verbindungseinheit ist dazu ausgebildet, das Pixelarray mit der Verarbeitungseinheit in (vor-)bestimmten Zeitabständen zu koppeln, um für den vierten Funktionstest, insbesondere für die Aufnahme der zweiten Referenzdaten, das zweite Referenzsignal in die Verarbeitungseinheit zur Signalverarbeitung einzuspeisen. Vorteilhafterweise kann die Referenzbeleuchtungseinheit dazu ausgebildet sein, (nur) für den vierten Funktionstest, insbesondere für die Aufnahme der zweiten Referenzdaten, das Referenzlicht auszusenden, wobei das ausgesendete Referenzlicht von dem zumindest einen Empfangspixel (anstelle des reflektierten/remittierten Sendelichts) als Empfangslicht empfangen wird. Vorzugsweise ist die Verbindungseinheit dazu ausgebildet, für den vierten Funktionstest das Pixelarray mit der Verarbeitungseinheit (zu vorbestimmten Zeitpunkten) während jeder Beleuchtungsphase der Abstandsmessung und/oder zwischen jeder Beleuchtungsphase der Abstandsmessung zu koppeln. Vorzugsweise ist die Verbindungseinheit dazu ausgebildet, für den vierten Funktionstest das Pixelarray mit der Verarbeitungseinheit mit der gleichen Aufnahmerate wie die Abstandsmessung zu koppeln. Mittels dieses vierten Funktionstests können Fehler in dem optoelektronischen Empfänger, und insbesondere sowohl in dem Pixelarray als auch in nachgeschalteten Komponenten, wie z.B. die Verbindungseinheit, die Verarbeitungseinheit und/oder die Datenvorverarbeitungseinheit, während des Betriebs des optoelektronischen Empfängers erkannt und die funktionelle Sicherheit des optoelektronischen Empfängers weiter verbessert werden. Die Empfangspixel können während des vierten Funktionstests möglicherweise auch durch äußere Einflüsse beeinträchtigt werden. Durch den vierten Funktionstest kann daher überprüft werden, ob der optoelektronische Sensor auch unter äußeren Einflüssen funktionstüchtig ist. Zudem ist vorstellbar, dass in dem vierten Funktionstest (insbesondere durch Einstellung des Referenzlichts) auch auf mittlere bis hohe oder sogar gesättigte Signalamplituden getestet werden kann.

Es versteht sich, dass der erste, zweite, dritte und vierte Funktionstest auch in jeder Kombination in dem optoelektronischen Sensor implementiert sein können. Beispielsweise kann anstelle des ersten Funktionstests der zweite, dritte und/oder vierte Funktionstest in dem optoelektronischen Sensor implementiert sein.

Vorteilhafterweise kann die Kombination mehrerer der Funktionstest, insbesondere aller Funktionstest, erlauben, den optoelektronische Sensor, insbesondere das Pixelarray, die Verbindungseinheit, die Verarbeitungseinheit, die (optionale) Datenvorverarbeitungseinheit und (optionale) weitere Komponenten, über den gesamten Dynamikbereich zu testen und dadurch die Sicherheit des optoelektronischen Sensors noch weiter zu verbessern.

Gemäß einer weiteren Ausführungsform werden zwischen oder während jeder Beleuchtungsphase der Abstandsmessung mehrere Datensätze an zweiten Referenzdaten aufgenommen.

Gemäß einer weiteren Ausführungsform ist/sind das Pixelarray und/oder die Referenzbeleuchtungseinheit dazu ausgebildet, für jede Aufnahme eines Datensatzes an zweiten Referenzdaten unterschiedliche Einstellungen, insbesondere unterschiedliche Amplituden für das Referenzlicht, unterschiedliche Frequenzen für das Referenzlicht, unterschiedliche Phasenlagen für das Referenzlicht, unterschiedliche Modulationsfrequenzen für das Referenzlicht, und/oder unterschiedliche Integrationszeiten für das Auslesen des Empfangspixels, zu verwenden. Unter Integrationszeit ist insbesondere die Zeitdauer zu verstehen, in welcher ein Pixel Licht empfängt und sich dadurch die Ladung im Pixel verändern kann.

Gemäß einer weiteren Ausführungsform ist das Pixelarray dazu ausgebildet, für den vierten Funktionstest das Referenzlicht mit zumindest einem ersten Empfangspixel und zumindest einem zweiten Empfangspixel zu empfangen und dabei für das Erzeugen und Ausgeben des zweiten Referenzsignals das erste und zweite Empfangspixel mit unterschiedlichen Beleuchtungszeiten zu beleuchten und/oder mit unterschiedlichen Integrationszeiten auszulesen. Eine solche Vorgehensweise kann auch als sogenannter "verschachtelter High-Dynamic-Range-Modus" (englisch "interleaved HDR mode") bezeichnet werden und erlauben, noch mehr "Referenzpunkte" zu gewinnen, auch wenn zum Beispiel das Pixelarray, insbesondere das zumindest eine Empfangspixel, mit dem Referenzlicht homogen beleuchtet wird.

Gemäß einer weiteren Ausführungsform werden die Diagnosedaten, die ersten Referenzdaten, die zweiten Referenzdaten, die Dunkelsignaldaten und/oder echte Messdaten in zumindest einem kombinierten Ausgabebild zusammengeführt. Ebenfalls ist vorstellbar, dass, falls zutreffend, auch die mehreren Datensätze an Diagnosedaten, die mehreren Datensätze an Dunkelsignaldaten, die mehreren Datensätze an ersten Referenzdaten und/oder echte Messdaten in zumindest einem kombinierten Ausgabebild zusammengeführt werden können.

Gemäß einer weiteren Ausführungsform umfasst der optoelektronische Sensor ferner eine Datenverarbeitungseinheit, welche dazu ausgebildet ist, anhand der (aufgenommenen) Diagnosedaten, anhand der (aufgenommenen) ersten Referenzdaten, anhand der (aufgenommenen) zweiten Referenzdaten und/oder anhand der (aufgenommenen) Dunkelsignaldaten den Betriebszustand des optoelektronischen Sensors, insbesondere des optoelektronischen Empfängers, zu überwachen,

Gemäß einer weiteren Ausführungsform ist die Datenverarbeitungseinheit dazu ausgebildet, zu überwachen, ob die Diagnosedaten, die Dunkelsignaldaten, die ersten Referenzdaten und/oder die zweiten Referenzdaten eine Signalamplitude innerhalb eines jeweiligen erwarteten Bereichs aufweisen. Die Überwachung der Signalamplituden kann eine einfachere Bewertungsgrundlage für die Erkennung von Fehlern sein. Zum Bespiel kann überprüft werden, ob mittlere bis hohe oder sogar gesättigte Signalamplituden in den aufgenommenen Daten erkennbar sind. Alternativ oder zusätzlich kann die Datenverarbeitungseinheit dazu ausgebildet sein, durch eine statistische Auswertung zu überwachen, welche Anzahl an Empfangspixeln, an Dunkelpixeln und/oder an Referenzempfangspixeln eine Signalamplitude innerhalb ihres jeweiligen erwarteten Bereichs ausgeben.

Vorzugsweise schließt der jeweilige erwartete Bereich für die Dunkelsignaldaten, die ersten Referenzdaten und/oder die zweiten Referenzdaten einen Sättigungsbereich (des optoelektronischen Empfängers) aus. Es versteht sich, dass der erwartete Bereich für die Diagnosedaten, die Dunkelsignaldaten, die ersten Referenzdaten und die zweiten Referenzdaten jeweils ein anderer sein kann. Die Datenverarbeitungseinheit kann ausgebildet sein, die Überwachung, insbesondere die statistische Auswertung, anhand einer Berechnung und Auswertung eines Histogramms, der Standardabweichung, des Mittelwertes, des Medians usw. vorzunehmen, was besonders vorteilhaft sein kann, wenn das Pixelarray, insbesondere des zumindest einen Empfangspixels, mit dem Referenzlicht homogen beleuchtet wird. Durch diese Vorgehensweisen kann die Datenverarbeitungseinheit den Betriebszustand des optoelektronischen Sensors überwachen, ohne komplexe Rechenoperationen wie Korrelation, Berechnung von Phasendifferenzen oder Berechnung von Abstandswerten (insbesondere anhand der zweiten Referenzdaten) vornehmen zu müssen. Die Datenverarbeitungseinheit kann mit der Datenvorerarbeitungseinheit des optoelektronischen Empfängers verbunden sein, um vorverarbeitete Daten zu empfangen und weiterzuverarbeiten.

Gemäß einer weiteren Ausführungsform wird ein Warnsignal ausgegeben, wenn die Diagnosedaten, Dunkelsignaldaten, die ersten Referenzdaten und/oder die zweiten Referenzdaten eine Signalamplitude außerhalb ihres jeweiligen erwarteten Bereichs aufweisen und/oder wenn die Anzahl an Empfangspixeln, Dunkelpixeln und/oder Referenzempfangspixeln, welche eine Signalamplitude außerhalb ihres jeweiligen erwarteten Bereichs aufweisen, gleich oder größer als ein Grenzwert ist.

Weiterer Gegenstand der Erfindung ist die Verwendung eines hierin beschriebenen optoelektronischen Sensors für Abstandsmessung mittels Laufzeitverfahren.

Weiterer Gegenstand der Erfindung ist ein Verfahren zur Betriebsüberwachung eines hierin beschriebenen optoelektronischen Sensors, insbesondere eines hierin beschriebenen optoelektronischen Empfängers, umfassend Erzeugen zumindest eines Diagnosesignals, Ausgeben eines basierend auf empfangenem Empfangslicht erzeugten Empfangssignals und/oder durch Auslesen zumindest eines Referenzpixels erzeugten Referenzsignals, und wahlweises Koppeln des Pixelarrays oder des zumindest einen Signalgenerators mit der Verarbeitungseinheit, sodass wahlweise einerseits das Empfangssignal und/oder das Referenzsignal oder andererseits das Diagnosesignal in die Verarbeitungseinheit zur Signalverarbeitung eingespeist werden kann, wobei der Signalgenerator mit der Verarbeitungseinheit in bestimmten Zeitabständen gekoppelt wird, um für einen ersten Funktionstest, insbesondere für die Aufnahme von Diagnosedaten, das Diagnosesignal in die Verarbeitungseinheit zur Signalverarbeitung einzuspeisen. Vorzugsweise wird der Signalgenerator mit der Verarbeitungseinheit (zu vorbestimmten Zeitpunkten) während, insbesondere am Ende, jeder Beleuchtungsphase der Abstandsmessung und/oder zwischen jeder Beleuchtungsphase der Abstandsmessung gekoppelt. Vorzugsweise wird der Signalgenerator mit der Verarbeitungseinheit für den ersten Funktionstest mit der gleichen Aufnahmerate wie die Abstandsmessung gekoppelt.

Es versteht sich, dass dann anhand der (aufgenommenen) Diagnosedaten, anhand der (aufgenommenen) Dunkelsignaldaten, anhand der (aufgenommenen) ersten Referenzdaten und/oder anhand der (aufgenommenen) zweiten Referenzdaten der Betriebszustand des optoelektronischen Sensors, insbesondere des optoelektronischen Empfängers, überwacht werden kann. Auf die Erkennung eines Fehlers hin kann beispielsweise ein Warnsignal ausgegeben werden.

Es versteht sich, dass das bezüglich des erfindungsgemäßen optoelektronischen Empfängers Beschriebene auch für den optoelektronischen Sensor, die Verwendung des optoelektronischen Sensors und das Verfahren gilt. Dies gilt insbesondere für Ausführungsformen und Vorteile. Weiterhin ist es zu verstehen, dass alle hierin offenbarten Merkmale und Ausführungsformen kombiniert werden können, wenn nicht ausdrücklich anders angegeben.

Nachfolgend wird die Erfindung rein beispielhaft anhand möglicher Ausführungsformen unter Bezugnahme auf die beigefügte Zeichnung beschrieben. Es zeigen:
- Fig. 1: eine schematische Darstellung eines optoelektronischen Sensors;
- Fig. 2: eine graphische Darstellung mittels eines optoelektronischen Sensors aufgenommener Diagnosedaten;
- Fig. 3: eine graphische Darstellung mittels eines optoelektronischen Sensors aufgenommener Diagnosedaten und Dunkelsignaldaten;
- Fig. 4: eine graphische Darstellung verschiedener Verstärkungen;
- Fig. 5: eine weitere graphische Darstellung der Diagnosedaten und Dunkelsignaldaten aus Fig 3.

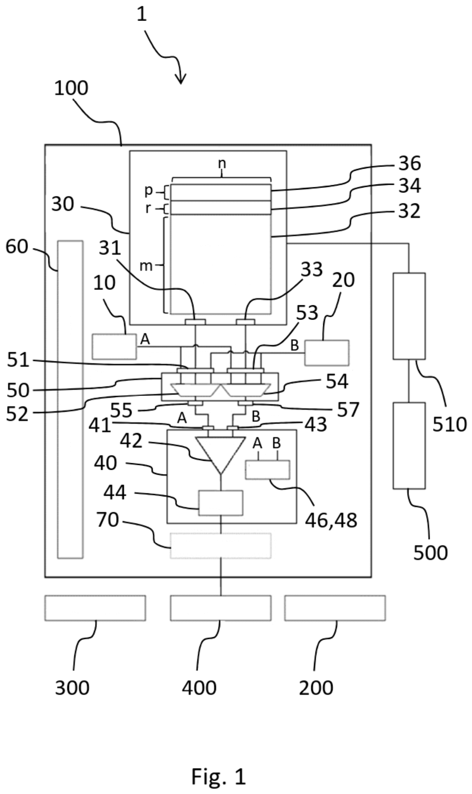

Der in Fig.1 dargestellte optoelektronische Sensor 1, insbesondere für Abstandsmessung mittels (Licht-)Laufzeitverfahren und vorzugsweise zur Anwendung in einer Industrieanlage und/oder für Sicherheitsanwendungen, umfasst einen optoelektronischen Empfänger 100, einen Lichtsender 200 zum Aussenden von Sendelicht, eine Stromversorgung 300, eine Datenverarbeitungseinheit 400 und eine Referenzbeleuchtungseinheit 500.

Der Lichtsender 200 in Fig. 1 ist ausgebildet, in Pulsen Sendelicht in einen Erfassungsbereich in einer Industrieanlage auszusenden. Das von dem Lichtsender 200 ausgesendete Sendelicht kann von dem Erfassungsbereich, und insbesondere von Objekten in dem Erfassungsbereich, reflektiert oder remittiert (d.h. diffus reflektiert) werden und als Empfangslicht zu dem optoelektronischen Empfänger 100 gelangen.

Der optoelektronische Empfänger 100, wie er in Fig. 1 gezeigt ist, umfasst einen ersten Signalgenerator 10 zur Erzeugung eines ersten Diagnosesignals A und einen zweiten Signalgenerator 20 zur Erzeugung eines zweiten Diagnosesignals B. Die Signalgeneratoren 10, 20 umfassen Digital-zu-Analog-Wandler (DAC) und sind für eine initiale (elektrische) Kalibrierung des optoelektronischen Sensors 1 vorhanden und/oder vorinstalliert.

Der optoelektronischen Empfänger 100 in Fig. 1 umfasst ferner ein Pixelarray 30, welches eine Vielzahl von Empfangspixel 32, eine Vielzahl von Referenzempfangspixel 34 und eine Vielzahl von Dunkelpixeln 36 umfasst. Die Vielzahl von Empfangspixel 32 sind in n Spalten und m Zeilen angeordnet, die Vielzahl von Referenzempfangspixel 34 sind in n Spalten und r Zeilen angeordnet und die Vielzahl von Dunkelpixel 36 sind in n Spalten und p Zeilen angeordnet. Es versteht sich, dass auch andere Anordnungen der Empfangspixel, Dunkelpixel und Referenzempfangspixel möglich sind. Das Pixelarray 30 in Fig.1 weist 512 Spalten an Empfangspixeln auf. Die Referenzempfangspixel 34 separieren die Empfangspixel 32 und die Dunkelpixel 36 voneinander (siehe Fig. 1).

Das Pixelarray 30 des optoelektronischen Empfängers 100 in Fig. 1 ist ausgebildet, basierend auf dem empfangenem Empfangslicht (pro Empfangspixel) ein differentielles Empfangssignal zu erzeugen und auszugeben. Anhand des differentiell Empfangssignals kann eine Abstandsmessung mittels (Licht-)Laufzeitverfahren erfolgen.

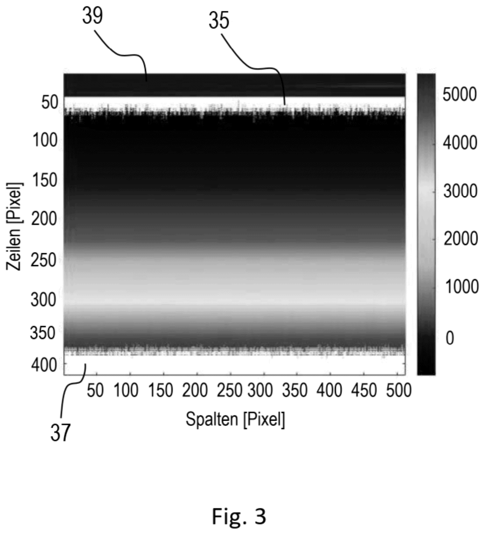

Das Pixelarray 30 (Fig. 1) ist dazu ausgebildet, für einen zweiten Funktionstest, insbesondere für die Aufnahme von Dunkelsignaldaten 39 (Fig. 3), durch Auslesen der Dunkelpixel 36 ein Dunkelsignal zu erzeugen und auszugeben.

Alternativ oder zusätzlich ist das Pixelarray 30 (Fig. 1) dazu ausgebildet, für einen dritten Funktionstest, insbesondere für die Aufnahme von ersten Referenzdaten, durch Auslesen der Referenzempfangspixel 34 ein erstes Referenzsignal zu erzeugen und auszugeben.

Die Referenzbeleuchtungseinheit 500 ist dazu ausgebildet, Referenzlicht auszusenden, das über ein Kopplungselement 510 innerhalb des optoelektronischen Sensors 1 auf die Empfangspixel 32 (und Referenzempfangspixel 34) geführt ist. Bei dem Kopplungselement 510 kann es sich über mindestens einen reflektierenden Bereich und/oder einen Lichtleiter handeln. Das von der Referenzbeleuchtungseinheit 500 ausgesendete Referenzlicht ist mit derselben Modulationsfrequenz moduliert wie das von dem Lichtsender 200 ausgesendete Sendelicht. Die Referenzbeleuchtungseinheit 500 ist dazu ausgebildet, (nur) für einen vierten Funktionstest, insbesondere für die Aufnahme von zweiten Referenzdaten, das Referenzlicht auszusenden, wobei das ausgesendete Referenzlicht von den Empfangspixeln 32 (anstelle des reflektierten/remittierten Sendelichts) als Empfangslicht empfangen wird. Das Pixelarray 30 ist dazu ausgebildet, für den vierten Funktionstest, insbesondere für die Aufnahme der zweiten Referenzdaten, basierend auf mittels der Empfangspixel 32 empfangenem Referenzlicht ein zweites Referenzsignal zu erzeugen und auszugeben.

Das von dem Pixelarray 30 ausgegebene Empfangssignal umfasst jeweils einen ersten Signalanteil und einen zweiten Signalanteil. Selbiges gilt für das Dunkelsignal, das erste Referenzsignal und das zweite Referenzsignal. Bevorzugt ist der Aufbau der Empfangspixel und derjenigen Pixel für das Dunkelsignal identisch, um z.B. eine identische Alterung oder Änderung zu erhalten. Das Pixelarray 30 umfasst für jede der n Spalten einen ersten Ausgang 31 für die Ausgabe der ersten Signalanteile und einen (von dem ersten Ausgang separaten) zweiten Ausgang 33 für die Ausgabe der zweiten Signalanteile. In dem optoelektronischen Empfänger 100 im optoelektronischen Sensor 1 ist für jede der n Spalten des Pixelarrays 30 eine Verbindungseinheit 50 und eine Verarbeitungseinheit 40 vorgesehen (nicht in Fig. 1 gezeigt), sodass jede Spalte des Pixelarrays 30 überprüft werden kann.

Der optoelektronische Empfänger 100 in Fig. 1 umfasst ferner zumindest eine Verarbeitungseinheit 40 zur Signalverarbeitung und zumindest eine Verbindungseinheit 50. Wie in Fig. 1 dargestellt ist ein erster Eingang 51 der Verbindungseinheit 50 mit dem ersten Ausgang 31 des Pixelarrays 30, mit dem ersten Signalgenerator 10 und mit dem zweiten Signalgenerator 20 verbunden. Ein zweiter Eingang 53 der Verbindungseinheit 50 ist mit dem zweiten Ausgang 33 des Pixelarrays 30, mit dem ersten Signalgenerator 10 und mit dem zweiten Signalgenerator 20 verbunden. Ein erster Ausgang 55 der Verbindungseinheit 50 ist mit einem ersten Eingang 41 der Verarbeitungseinheit 40 verbunden. Ein zweiter Ausgang 57 der Verbindungseinheit 50 ist mit einem zweiten Eingang 43 der Verarbeitungseinheit 40 verbunden.

Die Verbindungseinheit 50 in Fig. 1 ist ausgebildet, wahlweise einerseits den ersten Ausgang 31 und den zweiten Ausgang 33 des Pixelarrays 30 mit dem ersten Eingang 41 und zweiten Eingang 43 der Verarbeitungseinheit 40 oder andererseits den ersten Signalgenerator 10 und den zweiten Signalgenerator 20 mit dem ersten Eingang 41 und zweiten Eingang 43 der Verarbeitungseinheit 40 zu koppeln, sodass wahlweise einerseits das Empfangssignal, das Dunkelsignal, das erste Referenzsignal und/oder das zweite Referenzsignal oder andererseits das erste und zweite Diagnosesignal A, B in die Verarbeitungseinheit 40 zur Signalverarbeitung eingespeist werden kann. Zu diesem Zweck umfasst die Verbindungseinheit 50 einen ersten Multiplexer 52 und ein zweiten Multiplexer 54. Es versteht sich, dass auch mehr als zwei Multiplexer, also zum Beispiel auch drei, vier oder mehr Multiplexer vorhanden sein können.

Mit anderen Worten kann in einer ersten Kopplungseinstellung das (differentielle) Empfangssignal, das Dunkelsignal, das erste Referenzsignal und/oder das zweite Referenzsignal in die Verarbeitungseinheit 40 zur Signalverarbeitung eingespeist werden und, im Unterschied dazu, in einer anderen, zweiten Kopplungseinstellung das erste und zweite Diagnosesignal A, B in die Verarbeitungseinheit 40 zur Signalverarbeitung eingespeist werden. In Fig. 1 ist der optoelektronische Empfänger 100 in einer zweiten Kopplungseinstellung während der Aufnahme von Diagnosedaten gezeigt.

Die Verbindungseinheit 50 in Fig. 1 ist ausgebildet, den ersten und zweiten Signalgenerator 10, 20 mit der Verarbeitungseinheit 40 (zu vorbestimmten Zeitpunkten) während, insbesondere am Ende, jeder Beleuchtungsphase der Abstandsmessung und/oder zwischen jeder Beleuchtungsphase der Abstandsmessung zu koppeln, um für einen ersten Funktionstest, insbesondere für die Aufnahme von Diagnosedaten, das erste und zweite Diagnosesignal A, B in die Verarbeitungseinheit 40 zur Signalverarbeitung einzuspeisen.

Alternativ oder zusätzlich ist die Verbindungseinheit 50 dazu ausgebildet, das Pixelarray 30 mit der Verarbeitungseinheit 40 (zu vorbestimmten Zeitpunkten) während jeder Beleuchtungsphase der Abstandsmessung und/oder zwischen jeder Beleuchtungsphase der Abstandsmessung zu koppeln, um für den zweiten Funktionstest, insbesondere für die Aufnahme der Dunkelsignaldaten, das Dunkelsignal in die Verarbeitungseinheit 40 zur Signalverarbeitung einzuspeisen.

Alternativ oder zusätzlich ist die Verbindungseinheit 50 dazu ausgebildet, das Pixelarray 30 mit der Verarbeitungseinheit 40 (zu vorbestimmten Zeitpunkten) während jeder Beleuchtungsphase der Abstandsmessung und/oder zwischen jeder Beleuchtungsphase der Abstandsmessung zu koppeln, um für den dritten Funktionstest, insbesondere für die Aufnahme der ersten Referenzdaten, das erste Referenzsignal in die Verarbeitungseinheit 40 zur Signalverarbeitung einzuspeisen.

Alternativ oder zusätzlich ist die Verbindungseinheit 50 dazu ausgebildet, das Pixelarray 30 mit der Verarbeitungseinheit 40 (zu vorbestimmten Zeitpunkten) während und/oder zwischen jeder Beleuchtungsphase der Abstandsmessung zu koppeln, um für den vierten Funktionstest, insbesondere für die Aufnahme der zweiten Referenzdaten, das zweite Referenzsignal in die Verarbeitungseinheit 40 zur Signalverarbeitung einzuspeisen. Dabei werden zwischen oder während jeder Beleuchtungsphase der Abstandsmessung mehrere Datensätze an zweiten Referenzdaten aufgenommen. Das Pixelarray 30 und die Referenzbeleuchtungseinheit 500 sind dazu ausgebildet, für jede Aufnahme eines Datensatzes an zweiten Referenzdaten unterschiedliche Einstellungen, insbesondere unterschiedliche Amplituden für das Referenzlicht, unterschiedliche Phasenlagen für das Referenzlicht, unterschiedliche Modulationsfrequenzen für das Referenzlicht, unterschiedliche Integrationszeiten für die Empfangspixel 32, zu verwenden. Alternativ oder zusätzlich ist das Pixelarray 30 dazu ausgebildet, für den vierten Funktionstest das Referenzlicht mit zumindest einer ersten Zeile der m Zeilen der Vielzahl von Empfangspixel 32 und mit zumindest einer zweiten Zeile der m Zeilen der Vielzahl von Empfangspixel 32 zu empfangen und dabei für das Erzeugen des zweiten Referenzsignals für die Empfangspixel 32 in der ersten und zweiten Zeile der m Zeilen der Empfangspixel 32 unterschiedliche Integrationszeiten anzuwenden. Es wird also zeilenweise ausgelesen, sodass Werte von Empfangspixeln 32 aus verschiedenen Zeilen (aber gleichen Spalten) in jeweils einer einer Spalte zugeordneten Schaltung verarbeitet werden.

Es versteht sich, dass das oben genannte Beispiel auch bezüglich der Spalten und Zeilen vertauscht werden kann.

Das erste und/oder zweite Referenzsignal kann zum Beispiel wie in den Absätzen [0025] bis [0027] und [0030] bis [0045] der EP 4 047 389 A1 beschrieben erzeugt und ausgewertet werden.

Der optoelektronische Empfänger 100 in Fig. 1 umfasst ferner eine Steuerung 60, wie zum Beispiel einen Mikroprozessor, einen (einfacheren) programmierbaren Zustandsautomaten, oder einen Field Programmable Gate Array (FPGA), welche ausgebildet ist, den optoelektronischen Sensor 1, und insbesondere den optoelektronischen Empfänger 100, zu steuern. Die Steuerung 60 kann beispielsweise in dem optoelektronischen Empfänger 100 vorinstalliert sein, um generelle Funktionen des Pixelarrays 30 und/oder der Verarbeitungseinheit 40 zu steuern. Die Steuerung 60 kann ausgebildet sein, ebenfalls die Verbindungseinheit 50, den Lichtsender 200 und/oder die Referenzbeleuchtungseinheit 500 zu steuern, um die Funktionstests des optoelektronischen Empfängers 100 zu implementieren.

Das erste und zweite Diagnosesignal A, B definieren an den Ausgängen 55, 57 der Verbindungseinheit 50 und/oder an den Eingängen 41, 43 der Verarbeitungseinheit 40 in Bezug auf oder durch die Verarbeitungseinheit 40 ein differentielles Diagnosesignal (B - A oder A - B je nach Kopplungseinstellung der Verbindungseinheit 50). Das differentielle Diagnosesignal weist eine positive Polarität auf, wenn B - A oder A - B größer Null ist, und eine negative Polarität auf, wenn B - A oder A - B kleiner Null ist. Die absolute Höhe des ersten und zweiten Diagnosesignals A, B kann für die Erkennung bzw. das Testen der Sättigung jeweils eines einzelnen Teils der differentiellen Messung relevant sein (engl. "Single-Ended Saturation"). Für einen Test beider Polaritäten reicht es aus, die Verbindungseinheit 50 so anzusteuern, dass jeder der beiden Multiplexer 52, 54 den jeweils anderen Signalgenerator 10, 20 als Eingang verwendet, sodass eine Umkehr der Polarität erfolgen kann, ohne dass einer der beiden Signalgeneratoren 10, 20 neu konfiguriert werden muss.

Die Verbindungseinheit 50 (Fig. 1) ist dazu ausgebildet, für den ersten Funktionstest abwechselnd das erste Diagnosesignal A in den ersten Eingang 41 der Verarbeitungseinheit 40 und das zweite Diagnosesignal B in den zweiten Eingang 43 der Verarbeitungseinheit 40 oder das erste Diagnosesignal A in den zweiten Eingang 43 der Verarbeitungseinheit 40 und das zweite Diagnosesignal B in den ersten Eingang 41 der Verarbeitungseinheit 40 einzuspeisen. Mit anderen Worten ist die Verbindungseinheit 50 ausgebildet, für den ersten Funktionstest die Polarität des eingespeisten, differentiellen Diagnosesignals B - A, A - B zu invertieren. Das erste und das zweite Diagnosesignal A, B sind veränderbar. Die Signalgeneratoren 10, 20 können dazu ausgebildet sein, für den ersten Funktionstest das erste und das zweite Diagnosesignal A, B abwechselnd während einem Diagnose-Durchlauf zu verändern. Beispielsweise kann einer der beiden Signalgeneratoren 10, 20 die Amplitude des von ihm Diagnosesignals A, B verändern während der andere der beiden Signalgeneratoren 10, 20 ein konstantes Diagnosesignal erzeugt, um dann in der nächsten Runde das von ihm erzeugte Diagnosesignal A, B zu verändern. Der erste und/oder zweite Signalgenerator 10, 20 sind/ist dazu ausgebildet, während eines Diagnose-Durchlaufs unterschiedliche Steigungen für die Änderung der Amplitude des ersten und zweiten Diagnosesignals A, B zu verwenden. Der erste und/oder zweite Signalgenerator 10, 20 sind/ist folglich dazu ausgebildet, während eines Diagnose-Durchlaufs die Amplitude des ersten und/oder zweiten Diagnosesignals A, B und damit die Amplitude und/oder Polarität des differentiellen Diagnosesignals B - A, A - B zu verändern und dementsprechend einen (Spannungs-) Durchlauf des differentiellen Diagnosesignals durchzuführen (engl. "voltage sweep"). In Kombination mit dem Polaritätstausch kann in einem Diagnose-Durchlauf der gesamte Dynamikbereich beider Polaritäten mit kleinerer Anzahl an erzeugten Diagnosesignalwerten, und zum Beispiel nur mit der halben Anzahl an erzeugten Diagnosesignalwerten, überprüft bzw. abgedeckt werden. Die Signalgeneratoren 10, 20 müssen, jeweils für sich allein gesehen, nicht den gesamten Dynamikbereich abdecken, da der Polaritätstausch bzw. die Polaritätsumschaltung die Prüfung eines differentiellen Diagnosesignals mit invertierter Polarität (z.B. B - A, A - B) ermöglicht, ohne dass beispielsweise das differentielle Diagnosesignal B - A den gesamten Dynamikbereich beider Polaritäten durchlaufen muss.

Die Verarbeitungseinheit 40 des optoelektronischen Empfängers in Fig. 1 umfasst zumindest einen Verstärker 42, insbesondere einen Differenzverstärker, zur Signalverstärkung. Die Verarbeitungseinheit 40 in Fig.1 umfasst ferner einen ersten und einen zweiten Verstärkungsauswahlkomparator 46, 48, welche mit dem Verstärker 42 verbunden sind und ausgebildet sind, jeweils das (differentielle) Empfangssignal, das Dunkelsignal, das erste Referenzsignal, das zweite Referenzsignal oder das Diagnosesignal mit einem ersten, insbesondere negativen, Verstärkungsauswahlschwellenwert und mit einem zweiten, insbesondere positiven, Verstärkungsauswahlschwellenwert zu vergleichen, sodass die Verstärkung des Verstärkers 42 basierend auf einem Ausgangssignal der Verstärkungsauswahlkomparatoren 46, 48 ausgewählt werden kann. Die Verstärkungsauswahlschwellenwerte können programmierbar sein und beispielsweise jeweils mittels eines DAC erzeugt werden.

Die in Fig. 1 gezeigte Verarbeitungseinheit 40 umfasst ferner einen Analog-zu-Digital-Wandler (ADC) 44, wobei der Verstärker 42 ausgangsseitig mit dem ADC 44 verbunden ist. Mit anderen Worten ist die Verbindungseinheit 50 mit den zwei Multiplexern 52, 54, der Verstärker 42 und der ADC 44 in Reihe geschaltet. Der ADC 44 umfasst einen Analog-zu-Digital-Wandler mit differentiellem Eingang, der entsprechend vorzeichenbehaftete Ausgangsdaten liefert.

Der optoelektronische Empfänger 100 in Fig.1 umfasst eine (programmierbare) Datenvorverarbeitungseinheit 70, welche ausgebildet ist, ein digitales Ausgangssignal des ADC 44 zu verarbeiten. Die Datenvorverarbeitungseinheit 70 ist ausgebildet, eine Normalisierung verschiedener Verstärkungseinstellungen des Verstärkers 42 und/oder eine Formatkonvertierung eines digitalen Ausgangssignals des ADC 44 bereitzustellen. Die Datenvorverarbeitungseinheit 70 ist ausgebildet, eine Formatkonvertierung digitaler Daten basierend auf dem digitalen Ausgangssignals des ADC 44 vor Übertragung an die nachgeschaltete Datenverarbeitungseinheit 400 bereitzustellen.

Die Datenverarbeitungseinheit 400 des optoelektronischen Sensors 1 (Fig. 1) ist mit der Datenvorerarbeitungseinheit 70 des optoelektronischen Empfängers 100 verbunden, um ein vorverarbeitetes Signal zu empfangen und weiterzuverarbeiten.

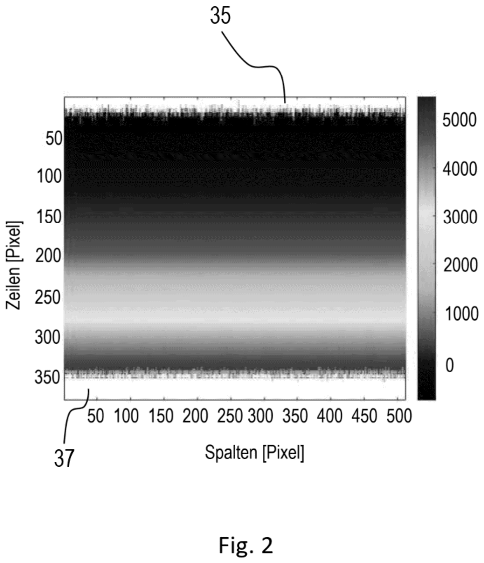

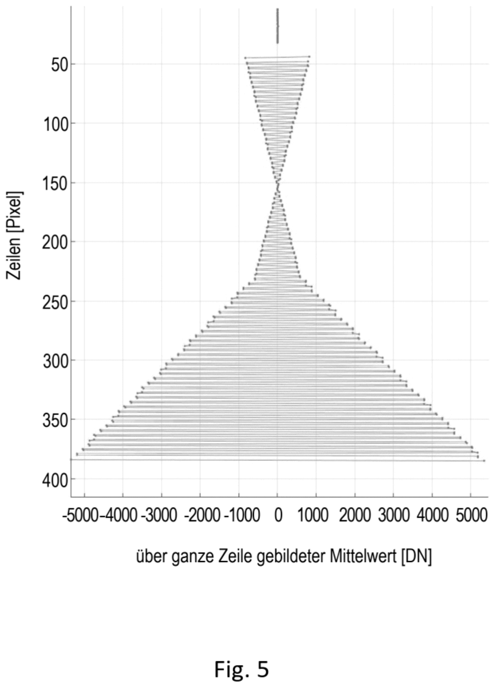

Die Datenverarbeitungseinheit 400 (Fig. 1) ist dazu ausgebildet, anhand der (aufgenommenen) Diagnosedaten, anhand der (aufgenommenen) ersten Referenzdaten, anhand der (aufgenommenen) zweiten Referenzdaten und/oder anhand der (aufgenommenen) Dunkelsignaldaten den Betriebszustand des optoelektronischen Sensors 1, insbesondere des optoelektronischen Empfängers 100, zu überwachen. Die Datenverarbeitungseinheit 400 ist dazu ausgebildet, zu überwachen, ob die Diagnosedaten (Fig. 2, 3 und 5), die Dunkelsignaldaten (Fig. 3 und 5), die ersten Referenzdaten und/oder die zweiten Referenzdaten eine Signalamplitude innerhalb eines jeweiligen erwarteten Bereichs aufweisen. Alternativ oder zusätzlich ist die Datenverarbeitungseinheit 400 dazu ausgebildet, durch eine statistische Auswertung zu überwachen, welche Anzahl an Empfangspixeln 32, an Dunkelpixeln 36 und/oder an Referenzempfangspixeln 34 eine Signalamplitude innerhalb ihres jeweiligen erwarteten Bereichs ausgeben. Die Überwachung, insbesondere die statistische Auswertung, erfolgt anhand einer Berechnung und Auswertung eines Histogramms, der Standardabweichung, des Mittelwertes und/oder des Medians. Durch diese Vorgehensweisen kann die Datenverarbeitungseinheit 400 den Betriebszustand des optoelektronischen Sensors überwachen, ohne komplexe Rechenoperationen wie Korrelation, Berechnung von Phasendifferenzen oder Berechnung von Abstandswerten (insbesondere anhand der zweiten Referenzdaten) vornehmen zu müssen. Wenn die Diagnosedaten (Fig. 2, 3 und 5), Dunkelsignaldaten (Fig. 3 und 5), die ersten Referenzdaten und/oder die zweiten Referenzdaten eine Signalamplitude außerhalb ihres jeweiligen erwarteten Bereichs aufweisen und/oder wenn die Anzahl an Empfangspixeln 32, Dunkelpixeln 36 und/oder Referenzempfangspixeln 34, welche eine Signalamplitude außerhalb ihres jeweiligen erwarteten Bereichs aufweisen, gleich oder größer als ein (jeweiliger) Grenzwert ist, kann ein Warnsignal ausgegeben werden.

Fig. 2 und Fig. 3 zeigen jeweils eine graphische Darstellung von Diagnosedaten (Fig. 2 und 3) und Dunkelsignaldaten 39 (Fig. 3), welche mit einem ähnlichen oder dem gleichen wie in Fig. 1 gezeigten optoelektronischen Sensor 1 während eines ersten Funktionstests (Fig. 2 und 3) und zweiten Funktionstests (Fig. 3) aufgenommen worden sind. Die in Fig. 2 und Fig. 3 gezeigten graphischen Darstellungen der aufgenommenen Daten können auch als Testbilder bezeichnet werden. Die den Diagnosedaten entsprechenden Bildpunkte in den Testbildern (Fig. 2 und Fig. 3) stehen durch das Abtrennen der Ausgänge des Pixelarrays 30 durch die Verbindungseinheit 50 während des ersten Funktionstests nicht mehr im Zusammenhang zu den einzelnen Pixeln des Pixelarrays 30. Die gezeigten Daten der Bildpunkte entstehen durch die erzeugten Diagnosesignale A, B und daher allein durch gezielte Ansteuerung der Signalgeneratoren 10, 20, der Verbindungseinheit 50, sowie der Verarbeitungseinheit 40 und der Datenvorerarbeitungseinheit 70. Die Darstellung soll hier den Verlauf der Spannungsrampe verdeutlichen, wobei jeder Bildpunkt der gezeigten Diagnosedaten einem von der Datenvorerarbeitungseinheit 70 ausgegebenen digitalen Wert entspricht, der auf das von den Signalgeneratoren 10, 20 erzeugte differentielle Diagnosesignal zurückzuführen ist.

Für den ersten Funktionstest, insbesondere den Diagnose-Durchlauf, wurde ein Spannungsdurchlauf (engl. "voltage sweep") durch die Signalgeneratoren 10, 20 erzeugt. Hierfür wurde die Amplitude des ersten Diagnosesignals A, erzeugt von einem ersten Signalgenerator 10, mit unterschiedlichen Steigungen verändert und für jede zweite Zeile der Diagnosedaten die Polarität mittels der Verbindungseinheit 50 vertauscht, d.h. bei jeder geradzahligen Zeile des Pixelarrays 30 wurde das von dem ersten Signalgenerator 10 erzeugte erste Diagnosesignal A in den ersten Eingang der Verarbeitungseinheit 40 (insbesondere des Verstärkers 42) und das von einem zweiten Signalgenerator 20 erzeugte zweite Diagnosesignal B in den zweiten Eingang der Verarbeitungseinheit 40 (insbesondere des Verstärkers 42) eingespeist. Zur Erzeugung der Diagnosedaten für die ungeradzahligen Zeilen wurde entsprechend das von dem zweiten Signalgenerator 20 erzeugte zweite Diagnosesignal B in den ersten Eingang 41 der Verarbeitungseinheit 40 (insbesondere des Verstärkers 42) und das von dem ersten Signalgenerator 10 erzeugte erste Diagnosesignal A in den zweiten Eingang 43 der Verarbeitungseinheit 40 (insbesondere des Verstärkers 42) eingespeist. Durch Auswahl der Startwerte und Steigungen kann es, wie hier gezeigt, ermöglicht sein, dass das von dem zweiten Signalgenerator 20 ausgegebene zweite Diagnosesignal B nicht variiert werden muss, was den Spannungsdurchlauf weiter vereinfacht. In den in Fig. 2 und Fig. 3 gezeigten graphischen Darstellungen der Diagnosedaten ist zur vereinfachten Veranschaulichung der Polaritätswechsel korrigiert worden, sodass der Verlauf der resultierenden verarbeiteten differentiellen Diagnosesignale dargestellt ist. Wie in Fig. 2 und Fig. 3 gekennzeichnet sind die unteren Zeilen 35 des Pixelarrays 30 (im Bereich von weniger als 40 bzw. 70 Pixel) in sogenannter Single-Ended-Sättigung, d.h. die Amplitude der Diagnosesignale A und/oder B entspricht einer Sättigung eines Speicherelements des jeweiligen (differentiellen) Empfangspixels. Es ist zu sehen, dass durch die Toleranzen der einzelnen Verarbeitungseinheiten 40 die Single-Ended-Sättigung bei unterschiedlichen Amplituden erreicht wird. Da es möglich ist, Bereiche zu definieren, in denen Sättigung vorliegen muss, oder nicht mehr vorliegen darf, kann mit Hilfe dieser Diagnosedaten 35 überprüft werden, ob die Erkennung der Single-Ended-Sättigung möglich ist und daraus gefolgert werden, ob diese Erkennung auch während der Aufnahme von (Live-) Messdaten noch korrekt funktioniert, d.h. es kann erkannt werden, ob eines der beiden Signalanteile des differentiellen Empfangssignals bzw. eines der Speicherelemente des (differentiellen) Empfangspixels in Sättigung ist, sodass keine Messung möglich ist. Durch die auch für diesen Datenbereich durchgeführten Polaritätswechsel kann die Erkennung der Single-Ended-Sättigung für beide Signalanteile und damit vollständig getestet werden. Die oberen Zeilen 37 des Pixelarrays 30 (im Bereich von mehr als 340 Pixel bzw. 360 Pixel) entsprechen einer Sättigung des ADC, d.h. ein zu niedriges oder zu hohes (Differenz-)Signal liegt vor. Die Signalanteile A und B können beispielsweise so weit auseinanderliegen, dass der ADC in Sättigung geht. Die während des zweiten Funktionstests durch Auslesen der Dunkelpixel 36 aufgenommenen Dunkelsignaldaten 39 (Fig. 3) sind zu den Diagnosedaten hinzugefügt worden, um das in Fig. 3 gezeigte kombinierte Testbild zu erzeugen. Für die Aufnahme der in Fig. 2 und 3 gezeigten Daten wurde der zweite Funktionstest und der erste Funktionstest in dieser Reihenfolge während einer Beleuchtungsphase der Abstandsmessung durchgeführt. Ein Fehler des optoelektronischen Empfängers 100 kann anhand der Diagnosedaten 35, 37 und/oder Dunkelsignaldaten 39 beispielsweise daran erkannt werden, dass im Vergleich zum Normalzustand Änderungen in den Daten erkannt werden, also z.B. Änderungen in der Signalamplitude, der für die jeweilige Zeile des (kombinierten) Testbildes erwartet wird und/oder zulässig ist, oder eine Sättigungsinformation, die in Abhängigkeit der Zeile des (kombinierten) Testbildes erwartet wird oder zulässig ist. Auf die Erkennung eines Fehlers in dem (kombinierten) Testbild hin kann beispielsweise von (dem optoelektronischen Sensor 1) ein Warnsignal ausgegeben werden.

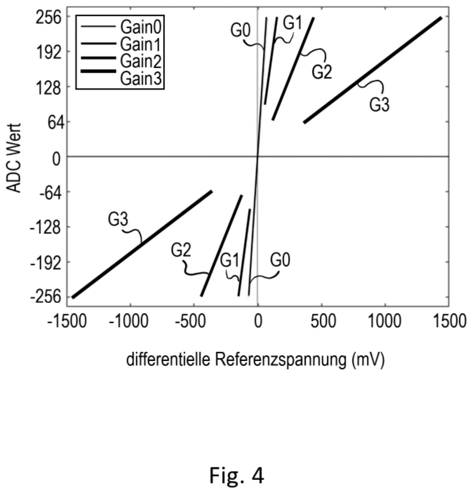

Fig. 4 zeigt eine graphische Darstellung verschiedener Verstärkungen G0 bis G3 (bzw. Gain0 bis Gain3) mit einem Verstärker 42 eines optoelektronischen Empfängers 100, wie er zum Beispiel in Fig. 1 gezeigt ist, und veranschaulicht den Einfluss der Verstärkungen (bzw. Verstärkungseinstellungen) auf die digitalen Ausgabewerte des ADC 44. Die beiden Diagnosesignale A und B erzeugt durch die beiden Signalgeneratoren 10, 20 sind Spannungssignale und werden von dem Verstärker 42 als differentielle Diagnosespannung ausgegeben, welche in der Folge von dem ADC 44 in das Digitale übersetzt wird. Wie in Fig. 4 dargestellt kann eine bessere Abdeckung des gesamten Dynamikbereichs von Verstärker 42 und ADC 44 für kleine Signalamplituden, das heißt notwendigerweise auch hohe Verstärkungen (z.B. G0) erreicht werden, indem eine feinere Schrittweite für die durch die Signalgeneratoren 10, 20 erzeugte differentielle Diagnosespannung verwendet wird, wohingegen für niedrigere Verstärkungen (z.B. G3) eine größere Schrittweite für die erzeugte differentielle Diagnosespannung ausreichend ist. Die Wahl einer kleineren Schrittweite für kleine Signalamplituden führt zu einer größeren Anzahl an unterschiedlichen Diagnosespannungen (und damit Testpunkten), die für den ersten Funktionstest der Verarbeitungseinheit 40 verwendet werden können.

Fig. 5 zeigt eine weitere graphische Darstellung der Diagnosedaten aus Fig. 3. Genauer zeigt Fig. 5 die zeilenweise (mit Berücksichtigung der Polarität) gebildeten Mittelwerte der Diagnosedaten in Fig. 3 und veranschaulicht die unterschiedlichen Steigungen bzw. die Schrittweiten in den Diagnosesignalen für den Diagnose-Durchlauf. Zu sehen sind am oberen Rand die Daten mehrere Zeilen an Dunkelsignaldaten (bis Zeile 32), gefolgt von einem Abschnitt mit Zeilen (in etwa Zeile 32-40), bei denen sich beide Signalanteile abwechselnd (durch den fortlaufenden Polaritätswechsel) in Single-Ended-Sättigung befinden, gefolgt von einem Spannungsdurchlauf mit unterschiedlichen Steigungen bei fortlaufendem Polaritätswechsel durch die Verbindungseinheit 50 während einem Spannungsdurchlauf durch nur einen der beiden Signalgeneratoren 10, 20 mit abschließendem Auftreten der ADC-Sättigung für beide Polaritäten des differentiellen Diagnosesignals am unteren Ende des (kombinierten) Testbildes (ab etwa Zeile 380).

### Bezugszeichenliste

- 1: optoelektronischer Sensor
- 10: erster Signalgenerator
- 20: zweiter Signalgenerator
- 30: Pixelarray
- 31: erster Ausgang des Pixelarrays
- 32: Empfangspixel
- 33: zweiter Ausgang des Pixelarrays
- 34: Referenzempfangspixel
- 35: Zeilen des Testbildes in Single-Ended-Sättigung
- 36: Dunkelpixel
- 37: Zeilen des Testbildes in ADC-Sättigung
- 39: Dunkelsignaldaten
- 40: Verarbeitungseinheit
- 41: erster Eingang der Verarbeitungseinheit
- 42: Verstärker
- 43: zweiter Eingang der Verarbeitungseinheit
- 44: Analog-zu-Digital-Wandler
- 46: erster Verstärkungsauswahlkomparator
- 48: zweiter Verstärkungsauswahlkomparator
- 50: Verbindungseinheit
- 51: erster Eingang der Verbindungseinheit
- 52: erster Multiplexer
- 53: zweiter Eingang der Verbindungseinheit
- 54: zweiter Multiplexer
- 55: erster Ausgang der Verbindungseinheit
- 57: zweiter Ausgang Verbindungseinheit
- 60: Steuerung
- 70: Datenvorverarbeitungseinheit
- 100: optoelektronischer Empfänger
- 200: Lichtsender
- 300: Stromversorgung
- 400: Datenverarbeitungseinheit
- 500: Referenzbeleuchtungseinheit
- 510: Kopplungselement

## Patentansprüche

1. Optoelektronischer Empfänger (100), insbesondere für Abstandsmessung mittels Laufzeitverfahren, umfassend
zumindest einen Signalgenerator (10, 20) zur Erzeugung zumindest eines Diagnosesignals (A, B);
ein Pixelarray (30) mit zumindest einem, insbesondere differentiellen, Empfangspixel (32) und mit zumindest einem, insbesondere differentiellen, Referenzpixel (34, 36), wobei das Pixelarray (30) dazu ausgebildet ist, basierend auf mittels des Empfangspixels (32) empfangenem Empfangslicht ein Empfangssignal und/oder durch Auslesen des Referenzpixels (34, 36) ein Referenzsignal zu erzeugen und auszugeben;
zumindest eine Verarbeitungseinheit (40) zur Signalverarbeitung; und zumindest eine Verbindungseinheit (50), welche mit dem Pixelarray (30), dem Signalgenerator (10, 20) und der Verarbeitungseinheit (40) verbunden ist und dazu ausgebildet ist, wahlweise das Pixelarray (30) oder den Signalgenerator (10, 20) mit der Verarbeitungseinheit (40) zu koppeln, sodass wahlweise einerseits das Empfangssignal und/oder das Referenzsignal oder andererseits das Diagnosesignal (A, B) in die Verarbeitungseinheit (40) zur Signalverarbeitung eingespeist werden kann,
wobei die Verbindungseinheit (50) dazu ausgebildet ist, den Signalgenerator (10, 20) mit der Verarbeitungseinheit (40) in bestimmten Zeitabständen, und vorzugsweise während, insbesondere am Ende, jeder Beleuchtungsphase der Abstandsmessung und/oder zwischen jeder Beleuchtungsphase der Abstandsmessung, zu koppeln, um für einen ersten Funktionstest, insbesondere für die Aufnahme von Diagnosedaten (35, 37), das
Diagnosesignal (A, B) in die Verarbeitungseinheit (40) zur Signalverarbeitung einzuspeisen.

2. Optoelektronischer Empfänger nach Anspruch 1,
wobei das zumindest eine Referenzpixel zumindest ein Dunkelpixel (36) umfasst, wobei das Pixelarray (30) dazu ausgebildet ist, für einen zweiten Funktionstest, insbesondere für die Aufnahme von Dunkelsignaldaten (39), durch Auslesen des Dunkelpixels (36) ein Dunkelsignal zu erzeugen und auszugeben, und wobei die Verbindungseinheit (50) dazu ausgebildet ist, das Pixelarray (30) mit der Verarbeitungseinheit (40) in bestimmten Zeitabständen, und vorzugsweise während oder zwischen jeder Beleuchtungsphase der Abstandsmessung, zu koppeln, um für den zweiten Funktionstest, insbesondere für die Aufnahme der Dunkelsignaldaten (39), das Dunkelsignal in die Verarbeitungseinheit (40) zur Signalverarbeitung einzuspeisen; und/oder
wobei das zumindest eine Referenzpixel zumindest ein Referenzempfangspixel (34) umfasst, welches Referenzlicht empfängt und/oder das zumindest eine Empfangspixel (32) und zumindest ein Dunkelpixel (36) des Pixelarrays (30) voneinander separiert, wobei das Pixelarray (30) dazu ausgebildet ist, für einen dritten Funktionstest, insbesondere für die Aufnahme von ersten Referenzdaten, durch Auslesen des Referenzempfangspixels (34) ein erstes Referenzsignal zu erzeugen und auszugeben, wobei die Verbindungseinheit (50) dazu ausgebildet ist, das Pixelarray (30) mit der Verarbeitungseinheit (40) in bestimmten Zeitabständen, und vorzugsweise während oder zwischen jeder Beleuchtungsphase der Abstandsmessung, zu koppeln, um für den dritten Funktionstest, insbesondere für die Aufnahme der ersten Referenzdaten, das erste Referenzsignal in die Verarbeitungseinheit (40) zur Signalverarbeitung einzuspeisen.

3. Optoelektronischer Empfänger nach Anspruch 1 oder 2, wobei die Komponenten des optoelektronischen Empfängers (100), insbesondere der Signalgenerator (10, 20), für eine Kalibrierung des optoelektronischen Empfängers (100) vorinstalliert sind.

4. Optoelektronischer Empfänger (100) nach einem der voranstehenden Ansprüche, wobei das Diagnosesignal (A, B) statisch oder veränderbar ist, wobei der Signalgenerator (10, 20) vorzugsweise dazu ausgebildet ist, während eines Diagnose-Durchlaufs die Amplitude des Diagnosesignals (A, B) zu verändern, vorzugsweise in dem Diagnose-Durchlauf den gesamten Dynamikbereich des optoelektronischen Empfängers (100), bevorzugt einschließlich von Single-Ended-Sättigung und/oder Sättigung einer Analog-zu Digital-Wandlung, zu testen, und/oder vorzugsweise während des Diagnose-Durchlaufs unterschiedliche Steigungen für die Änderung der Amplitude des Diagnosesignals (A, B) zu verwenden.

5. Optoelektronischer Empfänger (100) nach einem der voranstehenden Ansprüche,
wobei bei einer Überwachung zumindest einer anderen Komponente des optoelektronischen Empfängers (100) erzeugte Testdaten durch die Diagnosedaten ersetzt werden;
wobei die Diagnosedaten und die Dunkelsignaldaten (39), die ersten Referenzdaten und/oder echte Messdaten in zumindest einem kombinierten Ausgabebild zusammengeführt werden, wobei vorzugsweise während des Diagnose-Durchlaufs mehrere kombinierte Ausgabebilder erzeugt werden, wobei vorzugsweise während des Diagnose-Durchlaufs aufgenommene Diagnosedaten (35, 37) stückweise an die echten Messdaten angefügt werden, um die mehreren kombinierten Ausgabebilder zu erzeugen.

6. Optoelektronischer Empfänger (100) nach einem der voranstehenden Ansprüche,
wobei das Pixelarray (30) einen ersten Ausgang (31) für die Ausgabe eines ersten Signalanteils des Empfangssignals und einen zweiten Ausgang (33) für die Ausgabe eines zweiten Signalanteils des Empfangssignals umfasst, wobei ein erster Eingang (51) der Verbindungseinheit (50) mit dem ersten Ausgang (31) des Pixelarrays (30) und ein zweiter Eingang (53) der Verbindungseinheit (50) mit dem zweiten Ausgang (33) des Pixelarrays (30) verbunden ist,
wobei der optoelektronische Empfänger (100) einen ersten Signalgenerator (10) zur Erzeugung eines ersten Diagnosesignals (A) und einen zweiten Signalgenerator (20) zur Erzeugung eines zweiten Diagnosesignals (B) umfasst,
wobei die Verbindungseinheit (50) mit dem ersten Ausgang (31) des Pixelarrays (30), dem zweiten Ausgang (33) des Pixelarrays (30), dem ersten Signalgenerator (10), dem zweiten Signalgenerator (20), einem ersten Eingang (41) der Verarbeitungseinheit (40) und einem zweiten Eingang (43) der Verarbeitungseinheit (40) verbunden ist und dazu ausgebildet ist, wahlweise den ersten und zweiten Ausgang (31, 33) des Pixelarrays (30) mit dem ersten und zweiten Eingang (41, 43) der Verarbeitungseinheit (40) oder den ersten und zweiten Signalgenerator (10, 20) mit dem ersten und zweiten Eingang (41, 43) der Verarbeitungseinheit (40) zu koppeln.

7. Optoelektronischer Empfänger (100) nach Anspruch 6,
wobei der erste Eingang (51) der Verbindungseinheit (50) mit dem ersten und mit dem zweiten Signalgenerator (10, 20) verbunden ist,
wobei der zweite Eingang (53) der Verbindungseinheit (50) mit dem ersten und mit dem zweiten Signalgenerator (10, 20) verbunden ist,
wobei die Verbindungseinheit (50) dazu ausgebildet ist, für den ersten Funktionstest, insbesondere für die Aufnahme der Diagnosedaten (35, 37), vorzugsweise abwechselnd, den ersten Signalgenerator (10) mit dem ersten Eingang (41) der Verarbeitungseinheit (40) und den zweiten Signalgenerator (20) mit dem zweiten Eingang (43) der Verarbeitungseinheit (40) oder den ersten Signalgenerator (10) mit dem zweiten Eingang (43) der Verarbeitungseinheit (40) und den zweiten Signalgenerator (20) mit dem ersten Eingang (41) der Verarbeitungseinheit (40) zu koppeln.

8. Optoelektronischer Empfänger (100) nach Anspruch 6 oder 7,
wobei das erste Diagnosesignal (A) und das zweite Diagnosesignal (B) an den Ausgängen (55, 57) der Verbindungseinheit (50) und/oder an den Eingängen (41, 43) der Verarbeitungseinheit (40) in Bezug auf oder durch die Verarbeitungseinheit (40) ein differentielles Diagnosesignal definieren, wobei das differentielle Diagnosesignal je nach Kopplungseinstellung der Verbindungseinheit (50) eine positive oder eine negative Polarität aufweist, wobei vorzugsweise die Verbindungseinheit (50) dazu ausgebildet ist, die Polarität des differentiellen Diagnosesignals zu invertieren, und bevorzugt mehrfach während des Diagnose-Durchlaufs zu invertieren; und/oder
wobei das erste und/oder das zweite Diagnosesignal (A, B) statisch oder veränderbar sind, wobei der erste und/oder zweite Signalgenerator (10, 20) vorzugsweise dazu ausgebildet ist/sind, während des Diagnose-Durchlaufs die Amplitude des ersten und/oder zweiten Diagnosesignals (A, B) zu verändern, vorzugsweise in dem Diagnose-Durchlauf den gesamten Dynamikbereich des optoelektronischen Empfängers (100), bevorzugt einschließlich von Single-Ended-Sättigung und/oder Sättigung einer Analog-zu DigitalWandlung, zu testen, und/oder vorzugsweise während des Diagnose-Durchlaufs unterschiedliche Steigungen für die Änderung der Amplitude des ersten und/oder zweiten Diagnosesignals (A, B) zu verwenden.

9. Optoelektronischer Empfänger (100) nach einem der voranstehenden Ansprüche,
wobei die Verarbeitungseinheit (40) zumindest einen Verstärker (42), insbesondere Differenzverstärker, zur Signalverstärkung umfasst; und/oder wobei die Verarbeitungseinheit (40) einen Analog-zu-Digital-Wandler (44) umfasst, wobei vorzugsweise der Verstärker (42) ausgangsseitig mit dem Analog-zu-Digital-Wandler (44) verbunden ist,
wobei vorzugsweise die Verarbeitungseinheit (40) ferner zumindest einen Verstärkungsauswahlkomparator (46, 48) umfasst, welcher mit dem Verstärker (42) verbunden ist und ausgebildet ist, das Empfangssignal, das Referenzsignal oder das Diagnosesignal (A, B), insbesondere das differentielle Diagnosesignal, mit zumindest einem Verstärkungsauswahlschwellenwert zu vergleichen, sodass die Verstärkung des Verstärkers (42) basierend auf einem Ausgangssignal des Verstärkungsauswahlkomparators (46, 48) ausgewählt werden kann.

10. Optoelektronischer Empfänger (100) nach einem der voranstehenden Ansprüche,
wobei das Pixelarray (30) eine Vielzahl von Empfangspixeln (32) umfasst, wobei die Vielzahl von Empfangspixeln (32) in Spalten und/oder Zeilen angeordnet sind, wobei vorzugsweise jeweils eine Verbindungseinheit (50) und eine Verarbeitungseinheit (40) für jede einzelne Spalte und/oder Zeile vorgesehen ist oder wobei jeweils eine Verbindungseinheit (50) und eine Verarbeitungseinheit (40) für mehrere Spalten und/oder Zeilen zusammengenommen und/oder nur für bestimmte Spalten und/oder Zeilen vorgesehen ist, wobei vorzugsweise Spalten und/oder Zeilen für den ersten Funktionstest ausgewählt werden, welche für die Abstandsmessung ungeeignet sind, und/oder wobei vorzugsweise dasselbe Diagnosesignal (A, B) für mehrere Spalten und/oder Zeilen verwendet wird; und/oder
wobei das Pixelarray (30) eine Vielzahl von Referenzpixeln (34, 36) umfasst, wobei die Vielzahl von Referenzpixeln (34, 36) vorzugsweise in Spalten und/oder Zeilen angeordnet sind, und/oder wobei die Vielzahl von Referenzpixeln (34, 36) vorzugsweise eine Vielzahl von Dunkelpixeln (36) und/oder eine Vielzahl von Referenzempfangspixeln (34) umfasst.

11. Optoelektronischer Sensor (1), insbesondere für Abstandsmessung mittels Laufzeitverfahren, bevorzugt zur Anwendung in einer Industrieanlage und/oder für Sicherheitsanwendungen, umfassend zumindest einen optoelektronischen Empfänger (100) nach einem der voranstehenden Ansprüche 1 bis 10 und zumindest einen Lichtsender (200) zum Aussenden von Sendelicht.

12. Optoelektronischer Sensor (1) nach Anspruch 11,
ferner umfassend zumindest eine Referenzbeleuchtungseinheit (500) zum Aussenden von Referenzlicht, das innerhalb des optoelektronischen Empfängers (100) auf das Pixelarray (30), insbesondere das zumindest eine Empfangspixel (32), geführt ist, wobei das Referenzlicht vorzugsweise über ein Kopplungselement (510), insbesondere über mindestens einen reflektierenden Bereich und/oder einen Lichtleiter, auf das Pixelarray (30), insbesondere das zumindest eine Empfangspixel (32), geführt ist, wobei das Referenzlicht vorzugsweise mit derselben Modulationsfrequenz moduliert ist wie das von dem Lichtsender (200) ausgesendete Sendelicht, und
wobei das Pixelarray (30) dazu ausgebildet ist, für einen vierten Funktionstest, insbesondere für die Aufnahme von zweiten Referenzdaten, basierend auf mittels des zumindest einen Empfangspixels (32) empfangenem Referenzlicht ein zweites Referenzsignal zu erzeugen und auszugeben, und wobei die Verbindungseinheit (50) dazu ausgebildet ist, das Pixelarray (30) mit der Verarbeitungseinheit (40) in bestimmten Zeitabständen, und vorzugsweise während oder zwischen jeder Beleuchtungsphase der Abstandsmessung, zu koppeln, um für den vierten Funktionstest, insbesondere für die Aufnahme der zweiten Referenzdaten, das zweite Referenzsignal in die Verarbeitungseinheit (40) zur Signalverarbeitung einzuspeisen, wobei vorzugweise zwischen oder während jeder Beleuchtungsphase der Abstandsmessung mehrere Datensätze an zweiten Referenzdaten aufgenommen werden, wobei vorzugsweise das Pixelarray (30) und/oder die Referenzbeleuchtungseinheit (500) dazu ausgebildet ist/sind, für jede Aufnahme eines Datensatzes an zweiten Referenzdaten unterschiedliche Einstellungen, insbesondere unterschiedliche Amplituden für das Referenzlicht, unterschiedliche Phasenlagen für das Referenzlicht, unterschiedliche Modulationsfrequenzen für das Referenzlicht, und/oder unterschiedliche Integrationszeiten für das Auslesen des Empfangspixels (32), zu verwenden, und/oder wobei vorzugsweise das Pixelarray (30) dazu ausgebildet ist, für den vierten Funktionstest das Referenzlicht mit zumindest einem ersten Empfangspixel und zumindest einem zweiten Empfangspixel zu empfangen und dabei für das Erzeugen und Ausgeben des zweiten Referenzsignals das erste und zweite Empfangspixel mit unterschiedlichen Beleuchtungszeiten zu beleuchten und/oder mit unterschiedlichen Integrationszeiten auszulesen.

13. Optoelektronischer Sensor (1) nach Anspruch 11 oder 12,
wobei die Diagnosedaten, die ersten Referenzdaten, die zweiten Referenzdaten, die Dunkelsignaldaten (39) und/oder echte Messdaten in zumindest einem kombinierten Ausgabebild zusammengeführt werden; und/oder
ferner umfassend eine Datenverarbeitungseinheit (400), welche dazu ausgebildet ist, anhand der Diagnosedaten (35, 37), anhand der ersten Referenzdaten, anhand der zweiten Referenzdaten und/oder anhand der Dunkelsignaldaten (39) den Betriebszustand des optoelektronischen Sensors (1), insbesondere des optoelektronischen Empfängers (100), zu überwachen, wobei die Datenverarbeitungseinheit (400) vorzugsweise dazu ausgebildet ist, zu überwachen, ob die Diagnosedaten (35, 37), die Dunkelsignaldaten (39), die ersten Referenzdaten und/oder die zweiten Referenzdaten eine Signalamplitude innerhalb eines jeweiligen erwarteten Bereichs aufweisen, und/oder durch eine statistische Auswertung zu überwachen, welche Anzahl an Empfangspixeln (32), an Dunkelpixeln (36) und/oder an Referenzempfangspixeln (34) eine Signalamplitude innerhalb ihres jeweiligen erwarteten Bereichs ausgeben, und wobei vorzugsweise ein Warnsignal ausgegeben wird, wenn die Diagnosedaten (35, 37), die Dunkelsignaldaten (39), die ersten Referenzdaten und/oder die zweiten Referenzdaten eine Signalamplitude außerhalb ihres jeweiligen erwarteten Bereichs aufweisen und/oder wenn die Anzahl an Empfangspixeln (32), Dunkelpixeln (36) und/oder Referenzempfangspixeln (34), welche eine Signalamplitude außerhalb ihres jeweiligen erwarteten Bereichs ausgeben, gleich oder größer als ein Grenzwert ist.

14. Verwendung eines optoelektronischen Sensors (100) nach einem der Ansprüche 11 bis 13 für Abstandsmessung mittels Laufzeitverfahren.

15. Verfahren zur Betriebsüberwachung eines optoelektronischen Sensors (1) nach einem der Ansprüche 11 bis 13, insbesondere eines optoelektronischen Empfängers (100) nach einem der Ansprüche 1 bis 10, umfassend Erzeugen zumindest eines Diagnosesignals (A, B);
Ausgeben eines basierend auf empfangenem Empfangslicht erzeugten Empfangssignals und/oder durch Auslesen zumindest eines Referenzpixels (34, 36) erzeugten Referenzsignals; und
wahlweises Koppeln des Pixelarrays (30) oder des zumindest einen Signalgenerators (10, 20) mit der Verarbeitungseinheit (40), sodass wahlweise einerseits das Empfangssignal und/oder das Referenzsignal oder andererseits das Diagnosesignal (A, B) in die Verarbeitungseinheit (40) zur Signalverarbeitung eingespeist werden kann, wobei der Signalgenerator (10, 20) mit der Verarbeitungseinheit (40) in bestimmten Zeitabständen, und vorzugsweise während, insbesondere am Ende, jeder Beleuchtungsphase der Abstandsmessung und/oder zwischen jeder Beleuchtungsphase der Abstandsmessung, gekoppelt wird, um für einen ersten Funktionstest, insbesondere für die Aufnahme von Diagnosedaten (35, 37), das Diagnosesignal (A, B) in die Verarbeitungseinheit (40) zur Signalverarbeitung einzuspeisen.
